# EUROPEAN PATENT SPECIFICATION

(11) **EP 3 717 705 B1**
(45) Date of publication and mention of the grant of the patent: **21.02.2024**
(21) Application number: 18839902.6
(22) Date of filing: 26.11.2018
(51) Int. Cl.: E02B 17/02, E02B 17/00, F03D 13/25, F03D 13/10

(54) **A METHOD FOR INSTALLATION OF A PYLON SECTION OF AN OFF SHORE WIND TURBINE AND A VESSEL FOR PERFORMING SUCH A METHOD**
VERFAHREN ZUR INSTALLATION EINES MASTABSCHNITTS EINER OFFSHORE-WINDTURBINE UND SCHIFF ZUR DURCHFÜHRUNG SOLCH EINES VERFAHRENS
PROCÉDÉ POUR L'INSTALLATION D'UNE SECTION EN PYLON D'UNE ÉOLIENNE HORS RIVE ET RÉCIPIENT POUR RÉALISER UN TEL PROCÉDÉ

(30) Priority: 27.11.2017 NL 2019983; 01.06.2018 NL 2021043
(43) Date of publication of application: 07.10.2020
(73) Proprietor: Itrec B.V., 3115 HH Schiedam (NL)
(72) Inventor: WIJNING, Diederick Bernardus, 3115 HH Schiedam (NL); ROODENBURG, Joop, 3115 HH Schiedam (NL)
(74) Representative: EP&C
(86) International application number: PCT/NL2018/050788
(87) International publication number: WO 2019/103611

(56) References cited:
- EP-A1- 2 886 722
- CN-U- 205 257 825
- US-A1- 2010 293 781

## Description

An off shore wind turbine comprises a mast supporting a nacelle and the blades of the wind turbine. The mast is mounted on a foundation in the form of a jacket, i.e. a truss or frame work installed on the sea floor, or a pile, i.e. a cylindrical foot section, part of which is driven into the sea floor. Often, a transition piece is provided between the pile and the mast of the wind turbine.

The invention relates to a method for installation of a pylon section of an offshore wind turbine. Herein, a pylon section can be a pile adapted to support an offshore wind turbine or a mast of an off shore wind turbine.

The invention thus relates to a method for installation of a pile adapted to support an offshore wind turbine and to a method for installing the mast of an offshore wind turbine. The invention further relates to a vessel configured to be used in such a method.

In a known method for installing an offshore wind turbine, the foundation is installed first by erecting a jacket on the sea floor after which the wind turbine, comprising a mast and a nacelle, is installed on the jacket. A wind turbine can be installed as a whole at once as a whole or by assembling the wind turbine in parts on the jacket. A method for installing the mast of a wind turbine on a jacket is for example disclosed in US2010293781 and CN205257825. A method for installing the wind turbine as a whole at once is for example disclosed in WO2007091042 and in WO2004070119.

In an alternative method for installing an offshore wind turbine, the foundation, in the form of a pile, is installed first by driving the pile into the sea bottom after which the wind turbine, the wind turbine comprising a mast, nacelle and blades, is installed on the pile. Again, either by installing the wind turbine at once as a whole or by assembling the wind turbine in parts on the pile.

There is a trend towards cost reduction in installing off shore wind turbines, in particular to increasing the efficiency of wind turbine installation. This can for example be achieved by shortening the installation process and by enlarging the operational window, i.e. making the installation process less dependent of the circumstances, such as wind, heave, etc.

There is also a trend towards larger wind turbines and a desire to install offshore wind turbines at locations with larger water depths than currently encountered. Both result in larger and heavier foundations. Hence, it is expected that in the near future piles need to be installed that are larger than 100 meters, possibly 120 meters or larger. The weight of such piles may be larger than 1000mt, possibly 1300mt or above.

Installation of piles is currently done using jack-up type vessel in which legs are lowered into the water to lift the vessel at least partially out of the water so that waves have a limited or minimal effect on the vessel. However, a drawback of such a jack-up type vessel is that it takes a lot of time to lower the legs and to lift the vessel out of the water and to go through the reverse process after installation of the pile. Furthermore, the jack-up vessels typically are compact in size, and therefore allow for a limited amount of pay load to be carried.

It is an object of the invention to provide a faster method to install a pylon section adapted to support an offshore wind turbine. It is a further object to provide a method to install pylon sections at reduced costs.

This object is achieved by providing a method for installation a wind turbine at a wind turbine installation site, wherein use is made of a marine jack-up type vessel, the jack-up vessel comprising:
- a buoyant hull with a main deck for storing the pylon section during transport, the pylon section having a longitudinal axis extending between a top end of the pylon section and a bottom end of the pylon section
- at least three jack-up legs;
- a plurality of elevating units, each associated with a respective jack-up leg, adapted to move the respective jack-up leg vertically relative to the hull and to bring the vessel in an operational position wherein the legs engage the sea floor and the hull is above water level,
- a pylon section guide track and an associated track cart,

wherein the guide track is located on or in the main deck and extends between a support end of the guide track and an installation end of the guide track, and wherein the track cart comprises a pylon holder for engaging the bottom end of the pylon section of a wind turbine to support that bottom end of the pylon section and to guide that bottom end of the pylon section over the deck and along the guide track; and
   - a pylon section installation crane, which installation crane is fixed to the hull at the installation end of the guide track for lifting the pylon section of which one end is supported by the track cart, the installation crane having a boom that is slewable about a vertical slew axis and pivotal up and down about a horizontal boom pivot axis,
wherein the method comprises:
   - storing the pylon section on the main deck in a horizontal transport position, in which horizontal transport position the longitudinal axis of the pylon section extends substantially parallel to the main deck and to the guide track, and in which horizontal transport position the bottom end of the pylon is supported by the track cart located at the support end of the track;
   - arranging the vessel adjacent the wind turbine installation site and operating the elevating units to bring the vessel in an operational position, in which operational position the legs engage the sea floor and the hull is above water level;
   - upending the pylon section, to thus bring the pylon section from the horizontal transport position into a vertical installation position, in which vertical installation position the longitudinal axis of the pylon section extends in a substantially vertical direction,
the upending process comprising, at the installation end of the track, lifting the top end of the pylon section with the installation crane in an upward direction while guiding the bottom end of the pylon section along the guide track towards the installation end of the track, the cart supporting the bottom end of the pylon section during the upending process, thereby rotating the pylon section from a horizontal orientation to a vertical orientation about a substantially horizontal rotation axis, which substantially horizontal rotation axis preferably is perpendicular to the longitudinal axis of the vessel,
   - disengaging the pylon holder from the bottom end of the pylon section, lifting the pylon section with the installation crane in an upward direction, and using the installation crane, to position the pylon section, while supported in a vertical position, above the installation site; and
   - lower the pylon section into an installed position at the installation site; and
   - operating the elevating units so as to lower the hull of the vessel into the sea and to retract the jack-up legs upward.

The invention is based on the insight that providing a pylon section guide track and an associated track cart allows for guiding the foot end of the pylon section, during upending of the pylon section, over the deck of the vessel. The guide system allows for moving the pylon section with a reduced number of cranes.

Thus the process can be done in less time and/or the reduced number of cranes or the smaller cranes required in the process allow for a reduction in costs.

It is submitted that in the invention is in particular advantageous for upending piles, which are large and heavy compared to masts. The vessel allows for transporting a pile in a horizontal transport position, which is beneficial since it keeps the centre of gravity of the vessel plus load low, and for quickly and efficiently upending the pylon section at the installation site.

The vessel and method according to the invention enable lifting the top end of the pylon section while guiding the bottom end, the bottom end being supported by the track cart, until the pylon section is fully lifted upward in an upright position. Thus the bottom end does not need to be lifted during the upending process, and a smaller crane, and/or no crane at the bottom end of the pylon section is needed.

Furthermore, the invention allows for installing large sized piles, i.e. having a length of 100 meters or more, which in turn allows for installing wind turbines in deeper waters. This is in particular the case when the vessel is provided with two pylon section installation cranes on opposite sides of the installation end of the guide track. In such a configuration, the two installation cranes can be used to in unison lift the pylon section in the upright positon, and subsequently lift the pile overboard and land it on the sea floor in the upright position for being driven into the sea floor.

Furthermore, the invention allows for large pylon sections, in particular foundation piles, to be transported on a jack-up vessel.

In the prior art, large size pylon sections are preferably transported in a horizontal transport position to keep the centre of gravity low, i.e. close to the water surface. Furthermore, the length of these pylon sections requires large vessels. Therefore, the pylon sections are typically transported on large size pontoons or vessels, while the crane for up-ending and installing the pylon sections is located on a separate, smaller sized, jack-up vessel.

The claimed combination of a crane for up-ending the pylon section with a guide track and a track cart for guiding the pylon at on end during up-ending, allows for transporting a large pylon section on a jack-up vessel.

In a method according to the claimed invention, the jack-up vessel is used to transport a large pylon section, the top end of which extends beyond the contour of the vessel, while the bottom end thereof is supported by the cart on the track, the track being located in the vicinity of the support end of the guide track. To up-end the pylon section, the at least one crane located at the installation end of the guide track lifts the top end of the pylon section while the cart is used to guide the bottom end of the pylon section towards the installation end of the track.

It is noted that, while upending a pylon section, the bottom end of the pylon section is preferably guided by the cart up until the pylon is in the upright position. Only then is the pylon released from the cart. This to prevent a swinging movement of the pylon once it is released from the cart. Due to the large seize of the pylon, swinging and other free movements are preferably kept to a minimum to provide a fully controlled installation process.

In a method according to the invention, the crane is connected to a part of the pylon section that is located above the track or at least near to the end of the track, when the pylon is in the horizontal transport position, such that upending the pylon only requires a lift movement of the crane. Thus, the hook of the crane is moved along a linear, vertically orientated, trajectory.

In a further method according to the claimed invention, the at least one crane is connected with the top end of the pylon section at a location outside the contour of the vessel, or at least beyond the track. To enable the cart to support the bottom end of the pylon section during the entire up-ending process, the crane not only lifts the top end, but also moves the top end towards the track. Thus, the hook of the crane is moved along a curved trajectory, the curved being located in a plane parallel to the track. This requires the crane to slew during the up-ending process.

In an embodiment, on opposite sides of the guide track are provided two cranes, one on each side of the track, to in unison lift the top end of the pylon section while the bottom end is guided along the guide track. Providing a jack up vessel with a guide track and a track cart to guide a bottom end of a pylon during the upending process in combination with setting up the crane adjacent the track and on opposite sides thereof, allows for using comparatively compact cranes for lifting a large size, more in particular comparatively heavy, pylon section. the track and cranes being located on the same vessel allows for the cranes to be set up close to the track, and on opposite sides thereof. This enables the cranes to in unison lift the top end of a pylon section, and even to in unison lift and move the top end of a pylon section extending beyond the contour of the vessel.

Thus, the invention allows for installing large sized piles, more in particular piles having a length substantially larger than the length of the guide track, more in particular having a length larger than the size of the deck, the top end of the pylon section extending beyond the contour of the vessel, for example pylon sections having a length of 100 meters or more, to be transported and installed using a jack-up vessel.

In a preferred embodiment, jack-up vessel has a longitudinal axis, extending between the bow and the aft of the vessel, and the guide track extends parallel to that axis. Thus, the one or more pylon sections are also supported with their longitudinal axis parallel to the longitudinal axis of the vessel. This allows for a comparatively long track, and thus enables upending of large size pylon sections.

Typically, transport vessels are not jack up vessels. Thus, transport and installation of pylon sections using the same vessel, more in particular using a jack-up vessel, allows for a controlled up ending process, because the one or more cranes and the pylon section are located on the same vessel, eliminating relative movement of the pylon section and the crane due to waves.

In a method according to the invention, the vessel is used to transport pile to the installation site and carries a pile drive unit for driving the pile into the sea floor.

In an embodiment, the vessel is provided with a pile guide, for engaging a pile at the top section, to keep the pile in position while the pile is driven into the sea floor. The pile guide is located at the installation side, preferably the aft, of the vessel.

In an embodiment, the pile guide is removable mounted to the hull of the vessel, and can be moved, e.g. pivoted or slid, between a storage position, and an active positon, in which it extends beyond the hull of the vessel. In an embodiment the pile guide is configured to be removed from the hull when not in use, and is stored for example on the deck or in a storage facility.

In an embodiment, the pile guide is provided in the form of a cantilever pile guide. The cantilever pile guide comprises a pile guide section for guiding a pile and a track section, which track section is mounted on a track, preferably the guide track, for supporting the pile guide in an overboard position. The cantilever pile guide is furthermore slideable mounted on the track, such that it can be moved along the track between a storage positon, in which it is located above the deck of the vessel, and an active positon, in which a pile guide section of the cantilever pile guide is located outside a perimeter of the deck for guiding a pile being lowered towards the sea floor.

In an embodiment, the pile guide is part of a track cart, which track cart is also to be used for supporting the bottom end of the pylon section when in the horizontal position.

In an embodiment, the pile guide is configured to engage the pylon section while it is in the horizontal transport position, preferably to secure the pylon section relative to the track cart, and to pivot with the pile while it is upended. In such an embodiment, the cart and the cart track are configured to position the pile guide over the edge of the deck, above the sea, to guide the pile while it is being lowered towards the sea floor. Thus, in such an embodiment, the pile is coupled with the guide section during storage, during the upending, and during the installation process. Thus, the position of the pile can be fully controlled, and there is no need for handing over the pile from one positioning device to another, which is time consuming and above all difficult when handling very large and heavy objects such as piles.

In an embodiment, the method furthermore comprises guiding the pylon section while it is lowered into the sea, using a pile guide, and driving the pylon section into the sea floor using a pile drive.

In a further embodiment, the pile guide is part of the track cart and the track cart is used to move the pile guide from a storage position, in which the pile guide is located above the deck of the vessel, into an active position, in which the pile guide is located outside a perimeter of the deck for guiding a pile being lowered towards the sea floor.

The invention furthermore provides a jack-up vessel for installation of a pylon section of an off shore wind turbine. The jack-up vessel comprises:
- a buoyant hull with a main deck for storing a pylon section during transport, the pylon section having a longitudinal axis extending between a top end of the pylon section and a bottom end of the pylon section;
- at least three jack-up legs;
- a plurality of elevating units, each associated with a respective jack-up leg, adapted to move the respective jack-up leg vertically relative to the hull and to bring the vessel in an operational position wherein the legs engage the sea floor and the hull is above water level,
- a pylon section guide track and an associated track cart,

wherein the guide track is located on or in the main deck and extends between a support end of the guide track and an installation end of the guide track, and wherein the track cart comprises a pylon holder for engaging the bottom end of the pylon section; and,
   - a pylon section installation crane, which installation crane is fixed to the hull of the vessel at the installation end of the track, for lifting a pylon section of which one end is at least partially supported by the track cart, the installation crane having a boom that is slewable about a vertical slew axis and pivotal up and down about a horizontal boom pivot axis, and
wherein the pylon holder is configured to guide the bottom end of the pylon section along the guide track while the pylon section is upended from the horizontal transport position into an installation position, in which installation positon the pylon section has a vertical orientation and is at least partially supported by the pylon holder.¹
   ¹ Page 15, lines 4-7

The vessel has a pylon section guide track and an associated track cart that enable guiding the foot end of the pylon section, prior to lifting or during upending of the pylon section, over the deck of the vessel. The guide system allows for moving the pylon section with a reduced number of cranes. Thus the reduced number of cranes or the smaller cranes required in the process allow for a reduction in costs.²
² Page 4, lines 4-34

The pylon holder is configured to guide the bottom end of the pylon section along the guide track while the pylon section is upended from the horizontal transport position into an installation position, in which installation position the pylon section has a vertical orientation and is at least partially supported by the pylon holder.

Such a jack-up vessel is configured for transporting a pylon section, in particular a pile for forming the base of a wind turbine, in a horizontal transport position, and for upending the pylon section at an installation site, using the installation crane, into an installation position in which the pile has a vertical orientation.

It is submitted that the invention is in particular advantageous for upending piles, which are large and heavy compared to masts. The vessel allows for transporting a pile in a horizontal transport position, which is beneficial since it keeps the centre of gravity of the vessel plus load low, and for quickly and efficiently upending the pile at the installation site.

The vessel enables lifting the top end of the pylon section while guiding the bottom end, the bottom end being supported by the track cart, until the pylon section is fully lifted upward in an upright position. Thus the bottom end does not need to be lifted during the upending process, and a smaller crane, and/or no crane at the bottom end of the pylon section is needed.

Furthermore, the invention allows for a vessel for installing large sized pylon sections, i.e. having a length of 100 meters or more, which in turn allows for installing wind turbines in deeper waters. This is in particular the case when the vessel is provided with two pylon section installation cranes on opposite sides of the installation end of the guide track. In such a configuration, the two installation cranes can be used to in unison lift the pylon section in the upright positon, and subsequently lift the pylon section overboard and land it on the sea floor in the upright position for being driven into the sea floor.

In an embodiment, the pylon holder is configured to move, preferably pivot, between a first position, for at least partially supporting the pylon section at the bottom end thereof, when the pylon section is in the horizontal transport position, and a second position, for at least partially supporting the pylon section at the bottom end thereof, when the pylon section is in the installation position, in which horizontal transport position the pylon section has an essentially horizontal orientation.

Thus, the pylon holder can pivot with the pylon section while the pylon section is upended, and thus continuously support and guide the bottom end of the pylon section. In one embodiment, the pylon holder is a cradle shaped holder, which fully supports the bottom end of the pylon section when the pylon sections is in the horizontal transport position, but which does not support or engage the pylon section in a direction parallel to the longitudinal axis of the pylon section. Thus, when the pylon section has been upended, it functions as a stop, preventing movement in a direction perpendicular to the longitudinal axis of the pylon section, and thus prevents swinging of the pylon section, at least in one direction, while supported by an installation crane.

In an embodiment, the vessel furthermore comprises a pylon section top end support, which top end support is located at the installation end of the guide track for engaging the top end of the pylon section when the pylon section is in a horizontal transport position, in which horizontal transport position the longitudinal axis of the pylon section extends substantially parallel to the main deck and the guide track.

The pylon section top end support can be configured in the form of a rack or frame, that forms a cradle type support for engaging the pylon section at the top end thereof. The main object of the pylon section top end support is to support the top end of the pylon section such that the longitudinal axis of the pylon section extends in a substantially horizontal direction, when the bottom end of the pylon section is supported by the track cart in the horizontal transport position.

In an embodiment, the pylon section top end support is removable mounted on the deck of the vessel or on the guide track.

In an embodiment, the pylon top section support is mounted on the guide track at the installation end thereof. In such an embodiment, the pylon section top end support is preferably removed when the pylon section is upended and the bottom end of the pylon section, supported by the track cart, moves towards the installation end of the track section. In an alternative embodiment, the pylon section top end support is mounted on part of the deck located between the installation end of the guide track and the edge of the deck. In such an embodiment, the pylon section top end support does not need to be removed during the upending of the pylon section.

In an alternative embodiment, the pylon section top end support is part of a pylon section lifting device, which lifting device is removable mounted around the pylon section near the top end thereof to provide the pylon section with engagement sections to be coupled with the pylon section installation crane.

In an embodiment, the track cart is provided with a cart drive for controlled movement of the cart during the upending process, e.g. wherein the cart comprises a drive with a sprocket that cooperates with a rack extending along the guide track.

Thus, the cart drive can be used to position the cart, during the upending process, such that the wires of the installation crane lifting the top end of the pylon section keep a substantially vertical orientation.

In an embodiment, the jack-up vessel comprises a pylon section storage location on at least one side of the guide track, for supporting a pylon section in a horizontal storage position in which a longitudinal axis of the pylon section extends parallel to the guide track and parallel to a pylon section in the horizontal transport position on the transport track, and the vessel comprises a pylon section transfer device, e.g. one or more cranes or a transfer track with a track cart, for transferring a pylon section from the horizontal storage position into the horizontal transport position.

Thus, in such an embodiment multiple pylon sections can be transported by the vessel. The vessel can therefore install multiple pylon sections before it has to be resupplied. This allows for a more efficient installation process, in particular when used to install a windfarm, i.e. multiple installation sites grouped close together.

In an embodiment, the vessel further compromises at least a top transfer track and a bottom transfer track, the top transfer track and the bottom transfer track extending substantially perpendicular to the guide track, and the top transfer track and the bottom transfer track comprising at least one top transfer cart and at least one bottom transfer cart respectively for supporting a pylon section at the top and at the bottom respectively, for moving the pylon section into and out of the horizontal transport position on the guide track.

In an embodiment, the guide track and the track cart are configured to support the pylon section in the horizontal transport position such that the longitudinal axis of the pylon section extends parallel to a longitudinal axis of the vessel and preferably is located at the centre of the vessel.

In an embodiment, the guide track and the track cart are configured to support the pylon section, when in the horizontal transport position, with the top end located near the installation crane and an installation edge of the deck, i.e. the edge of the deck over which the pylon section will be lifted off the vessel, and with the bottom end located away from the installation crane and the installation edge of the vessel.

In an embodiment of a vessel according to the invention the track cart is configured for supporting a pylon section in the vertical transport position and in the horizontal transport position, e.g. wherein the cart comprises a pylon section holder for engaging the bottom end of a pylon section, and which pylon section holder can be pivoted between a horizontal support position for engaging the bottom end of a pylon section having a horizontal orientation and
a vertical support position for engaging the bottom end of a pylon section having a vertical orientation. Such an embodiment is in particular advantageous for transporting a pile, i.e. a pylon section configured to form a base of a wind turbine, which are relatively large and heavy, compared to a mast of a wind turbine that is to be mounted onto such a pile, or on a transition peace mounted onto such a pile.

In an embodiment, the track cart has a pylon section holder, which pylon section holder is configured to engage both the larger piles and relative smaller mast sections. In an embodiment, the pylon section holder comprises an adaptable gripper, clamp or cradle, that can be adapted to fit the size and/or shape of the pylon section to be engaged. Also, a track cart can be provided with multiple, differently sized interchangeable pylon section holders, thus, the cart can be provided with a couple element that fits the pylon section to be handled.

In an embodiment, the track cart is provided with a pylon section holder for supporting pylon sections in the horizontal transport position, and allowing for upending the pylon section while supporting it, and with a pylon section holder for supporting pylon sections in the vertical transport position, which pylon section holders can be interchanged.

Thus, one pylon section holder is used for transporting a pylon section in a horizontal transport position, and during upending that pylon section, which pylon section holder is replaced with a different pylon section holder for transporting a pylon section in the vertical transport position. As an alternative, one pylon section holder can be used for both transportation modes, i.e. can be set in a fixed in a first position relative to the cart for transporting a pylon section in the vertical transport position and be fixed in a second position for transporting a pylon section in the horizontal transport position, and can be driven between these positions during the upending process.

Typically, the horizontal transport position is to be used for piles, while mast sections, preferably with the nacelle and blades already mounted, are transported in the upright position, the pile typically having a larger diameter and being of more weight than the mast. Thus, in an embodiment, one pylon section holder is configured to engage large diameter pylon sections and another pylon section holder is provided for engaging small diameter pylon sections. As an alternative, and as already explained above, an adaptive pylon section holder can be provided to engage both a pylon section of a large and of a small diameter, or an adapter piece can be provided to enable the a pylon section holder fit for small diameter pylon sections to also receive pylon sections having a large diameter.

In an embodiment, the pylon section holder is configured to receive the bottom end of a pylon section in the vertical transport position, e.g. comprises a cone for inserting in the bottom end of the pylon section and/or a hollow section for receiving the bottom end and for engaging the outside circumferential surface of the bottom end of the pylon section. In an embodiment, the pylon section holder comprises one or more clamping devices for engaging the bottom end of the pylon section to secure the pylon section in the vertical transport position.

In an embodiment, the deck of the jack-up vessel has an installation side, the installation crane, preferably both installation cranes, being mounted to the hull of the vessel at the installation side of the vessel, and the installation end of the guide track is located at the installation side. Furthermore, preferably the guide track extends perpendicular to the installation side of the deck of the vessel.

In an embodiment, the vertical slew axis of the respective installation cranes define a virtual plane, and an installation side of the main deck of the vessel is located at an installation side of the virtual plane and the main deck is located at a deck side of the virtual plane.

In a further embodiment, the guide track passes between two installation cranes and between the two legs of the vessel located at the installation side of the main deck of the vessel, and the guide track extends in a direction perpendicular to the virtual plane.

In an embodiment of a vessel according to the invention, the vessel comprises a second installation crane and the two installation cranes are fixed to the hull on opposite sides of the guide track at the installation end thereof, for in unison lifting a pylon section of which one end is supported by the track cart, and for lifting the pylon section from the vessel onto an installation site. Providing the jack-up with two installation cranes on opposite sides of the guide track allows for the installation cranes to support a pylon section on opposite sides thereof, and thus to, in unison, lift a pylon sections having a length similar to or larger than the length of the jib. In this context it is submitted that because of installation cranes typically being provided with a travelling block and often with spreaders and similar devices, a single installation crane is not able to lift a pylon section in an upright position, the pylon section having a height similar to having the height of the jib.

In a further embodiment, each crane has a storage configuration, in which the jib is located at the deck side of the virtual plane, and an installation configuration in which the jib is located at the installation side of the virtual plane.

In an embodiment, the pylon section installation crane is an around the leg crane, i.e. is mounted around a leg of the jack-up vessel, preferably the two pylon section installation cranes are both around the leg cranes, i.e. are each mounted around a leg of the jack-up vessel. This allows for a compact configuration of the jack-up vessel, and, the latter for an extra stabile installation configuration due to the cranes being located around the legs supporting the vessel, and on opposite sides of the guide track, more in particular the installation end of the guide track.

In an embodiment, the jack-up vessel has four legs, the four legs comprising two front legs and two rear legs, wherein the two rear legs are spaced farther away from each other than the two front legs, to thus create additional deck space between the two rear legs, preferably between the two around the leg cranes mounted on said rear legs.

In an embodiment, the jack-up vessel furthermore comprises a cantilever, e.g. for performing well bore operations, and the guide track is adapted to cooperate with the cantilever to move the cantilever relative to the hull at least in longitudinal direction of the guide track between a retracted position and an extended position, in which extended position an operational end of the cantilever structure extends beyond an installation side of the main deck of the vessel.

In an embodiment, the guide track and/or the installation crane is/are adapted to move the cantilever into a deck clearing position wherein a clear deck area of the main deck is present between said cantilever and the installation side of the main deck of the vessel, wherein the clear deck area extends at least 20 meters in a direction perpendicular to said installation side and at least 10 meters transverse to the guide track direction, e.g. to allow for placing a topsides on said clear deck area.

In an embodiment, the jack-up vessel comprises a cantilever motion assembly, which cantilever motion assembly preferably comprises the guide track, which guide track preferably comprises one or more rails mounted on said main deck, e.g. in an axial direction of the hull perpendicular to the second axial side, and wherein said one or more rails extend towards or to a side of the hull so as to allow for the cantilever motion assembly to move the cantilever relative to the vessel between extended positions wherein an operational end of the cantilever extends beyond the side of the hull, a retracted position wherein said operational end is before the side of the hull and the entire cantilever is within the contour of the hull, e.g. the cantilever being within a contour delimited by said jack-up legs.

It will be apparent to the skilled person that features and embodiments described in relation to one device, system, vessel, or method can also be applied to other described devices, systems, vessels or methods, where applicable. For instance, the features and embodiments described in relation to the jack-up vessel according to the invention can also be applied to the method as this method also includes the use of a jack-up vessel.

The examples described above are presented with reference to providing a jack-up vessel comprising a crane, or a crane for providing such a vessel. However, as will be understood by one skilled in the art, the devices and techniques described herein may be applied to provide cranes for any suitable off shore vessel.

Advantageous embodiments of the vessel according to the invention and the method according to the invention are disclosed in the sub claims and in the description, in which the invention is further illustrated and elucidated on the basis of a number of exemplary embodiments, of which some are shown in the schematic drawing. In the figures, components corresponding in terms or construction and/or function are provided with the same last two digits of the reference numbers.

Whilst primarily presented for illustrative purposes with reference to one or more of the figures, any of the technical features addressed below may be combined with any of the independent claims of this application either alone or in any other technically possible combination with one or more other technical features.

The invention will now be described in a non-limiting way by reference to the accompanying drawings in which like parts are indicated by like reference symbols, and in which:
Fig. 1 depicts a side view in partial see through of a jack-up vessel according to an embodiment of the invention with two pylon sections on deck and legs in a lifted position;
Fig. 2 depicts a top view of the vessel of Fig. 1;
Fig. 3 depicts a side view of a jack-up vessel according to an embodiment of the invention in a first working position upending a pylon section;
Fig. 4 depicts a side view of the jack-up vessel of Fig. 3 in a second working position upending the pylon section;
Fig. 5 depicts a side view of the jack-up vessel of Fig. 3 in a third working position upending the pylon section;
Fig. 6 depicts a side view of the jack-up vessel of Fig. 3 supporting the pylon section above an installation site;
Fig. 7 depicts a rear view of the jack-up vessel of Fig. 3 supporting the pylon section above an installation site, with additional objects on a deck;
Fig. 8 depicts a side view of the jack-up vessel of Fig. 7 with a PILE DRIVE mounted on the pylon section for driving the pylon into the sea floor;
Fig. 9 shows a top view of a jack-up vessel shown in fig. 8, with the PILE DRIVE mounted on the pylon section, with one of the two cranes depicted, and with a pylon section in a horizontal storage position on the deck and the pylon section;
Fig. 10 depicts a side view of the jack-up vessel of Fig. 7 with the pylon section driven into the sea floor while an intermediate section is mounted on the pylon section;
Fig. 11 shows a rear view of a jack-up vessel showing a crane position with a one crane configuration left and a crane position with a two crane configuration right;
Fig. 12 shows a perspective view of a jack-up vessel according to an embodiment of the invention supporting a pile guide;
Fig. 13 shows a perspective view of a jack-up vessel according to an embodiment of the invention being supplied with pylon sections from a barge;
Fig. 14-17 show a jack up vessel for installing pylon sections according to the invention provided with a cantilever; and
Fig. 18 depicts a side view of the jack-up vessel similar to the vessel of Fig. 3 in a working position during the upending of the pylon section which working positon follows the second working position and precedes the third working position, shown in respectively Fig. 4 and Fig. 5.

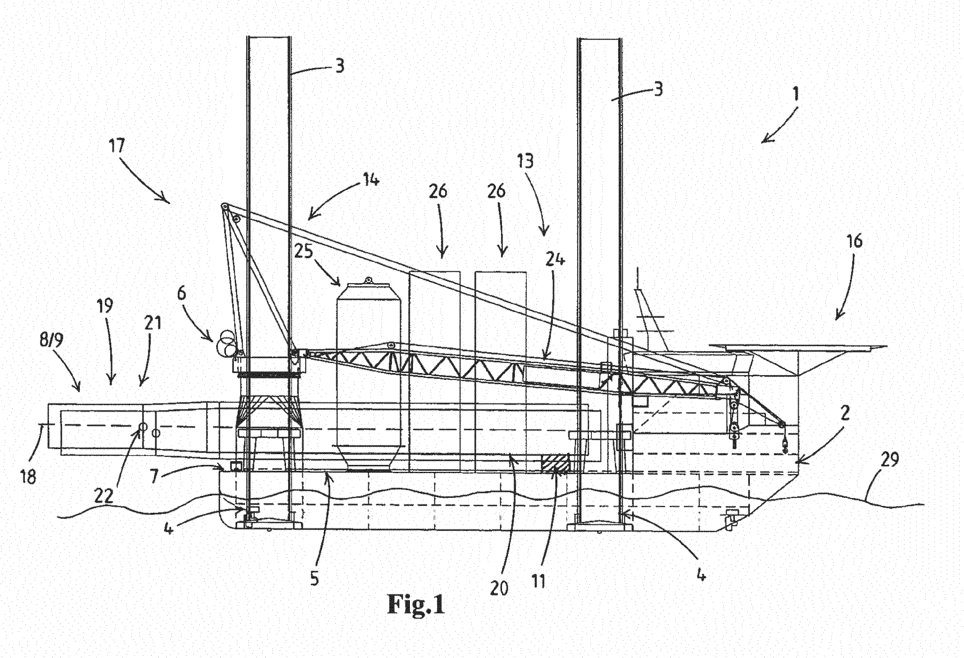

Figure 1 shows a marine jack up vessel 1 for installing a pylon section of a wind turbine at a wind turbine installation site, according to the claimed invention.

The jack-up vessel 1 comprises a buoyant hull 2, four jack up legs 3, a plurality of elevating units 4, a pylon section guide track 5, and two pylon section installation cranes 6.

A marine jack-up vessel according to the claimed invention comprise at least three jack-up legs, in the preferred embodiment shown, the vessel comprises four legs. Such a vessel furthermore comprises a plurality of elevating units, each associated with a respective jack-up leg. The elevation units 4 are adapted to move the respective jack-up leg 3 vertically relative to the hull 2 and to bring the vessel 1 in an operational position wherein the legs engage the sea floor and the hull is above water level. The legs 3 are moved in the opposite direction to bring the vessel 1 in a transport position, shown in figure 1, wherein, wherein a lower end of the legs is retracted into the hull. This configuration enables the vessel to travel between locations.

In the embodiment shown, the jack-up vessel 1 has a longitudinal axis 15, a front or bow 16, with a structure comprising amongst others personnel quarters, and a rear or aft 17, at which the two pylon section installation cranes 6 are located.

According to the invention, the buoyant hull 2 has a main deck 7 for storing a pylon section 8 during transport, which deck is provided with a pylon section guide track 5 and an associated track cart 11. The pylon section guide track is located on or in the main deck and extends between a support end of the guide track.

In the embodiment shown, the pylon section guide track 5, comprising two parallel rails 12, is located on the main deck 7 and extends between a support end 13 of the guide track and an installation end 14 of the guide track.

The exemplary jack-up vessel 1 shown supports two pylon sections, in the example piles 9, one of which is shown in a horizontal transport position on the pylon section guide track and one is shown in a horizontal storage position.

In the embodiment shown, furthermore a pile drive 25, e.g. an air hammer, for driving the pylon sections into the seafloor, and two intermediate sections 26, to be mounted on the pylon sections, and a located on the main deck 7.

The pylon sections 8 have a longitudinal axis 18 extending between a top end 19 of the pylon section and a bottom end 20 of the pylon section. In the embodiment shown, the pylon sections are piles provided with a partially tapered top section 21, which top section is furthermore provided with two lifting pins 22 for coupling with the pylon section installation crane.

The track cart 11 is provided with a pylon holder 23 for engaging the bottom end 20 of the pylon section 8. The track cart is configured to move along the pylon section guide track 5, and thus guide the pylon section 8, or at least the bottom end 20 thereof, along the guide track as well.

At the installation end 14 of the guide track 5, the two pylon section installation cranes 6 are located on opposite sides of the guide track. The installation cranes are fixed to the hull 2 of the vessel 1 at the installation end of the track, for lifting a pylon section of which one end is at least partially supported by the track cart.

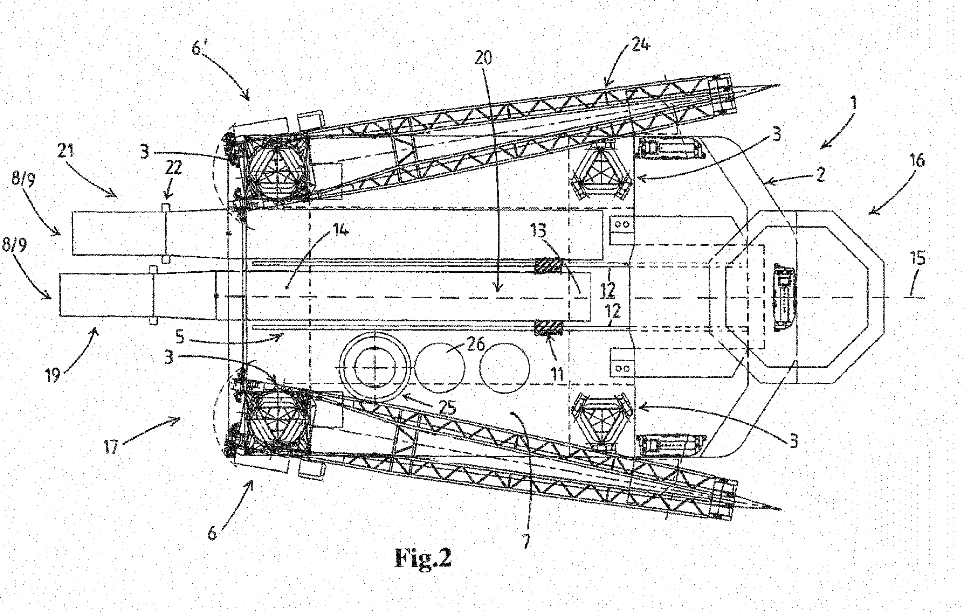

The installation cranes 6 each have a boom 24 that is slewable about a vertical slew axis 25 and pivotal up and down about a horizontal boom pivot axis 26. In figures 1 and 2, the cranes are depicted in their storage position, in which the booms 24 are lowered and with their top end are supported on a boom rest 27 located near the bow of the vessel.

In the preferred embodiment shown, the boom rest is located at the outside of the vessel, to support the top end of the booms outside the contour of the hull, we seen in top view, and above the water. This enables the booms to extend along the front legs, when in the legs are in the lifted position, and furthermore allows for objects, in the embodiment shown the pile drive 25 and the two intermediate sections 26, to be stored on the main deck, which objects extend up to or even above the booms.

In a preferred embodiment of a jack-up vessel according to the invention, these boom rests are retractable boom rests, and can be moved between a support configuration, in which they extend beyond the contour of the hull, when seen in top view, and can be used to support a boom rest, and storage configuration, in which they are located within the contour of the hull. Such a storage configuration allows for a reduced width of the vessel, compared to the width of the vessel with the boom vessel in the support configuration.

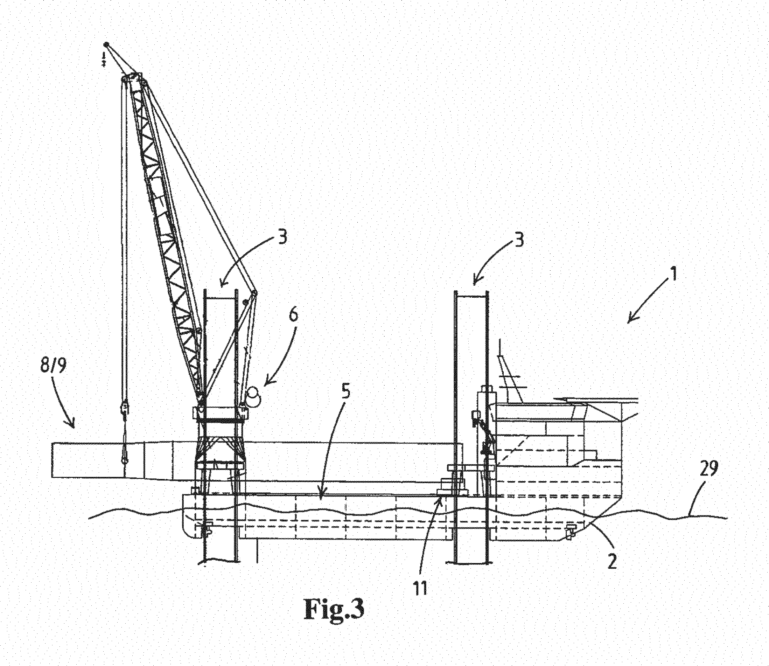

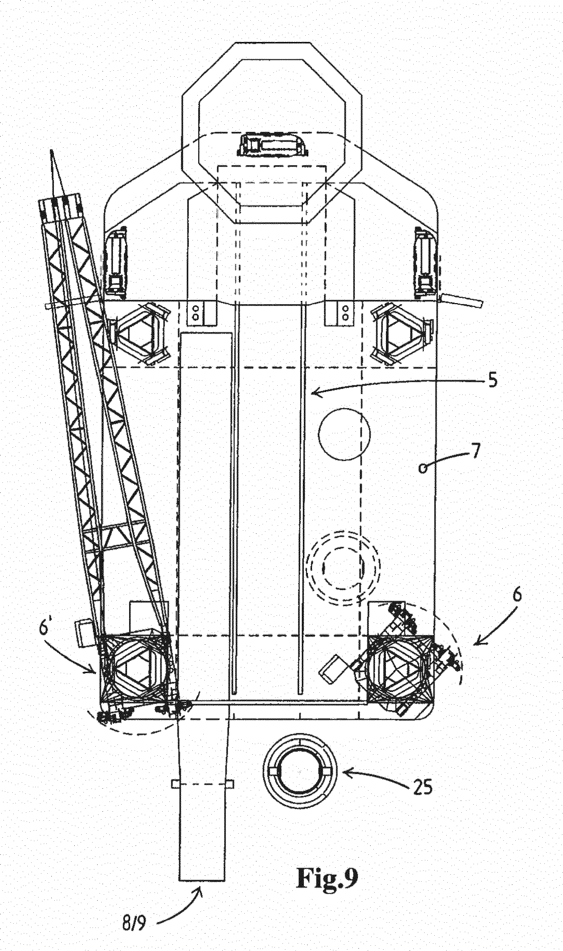

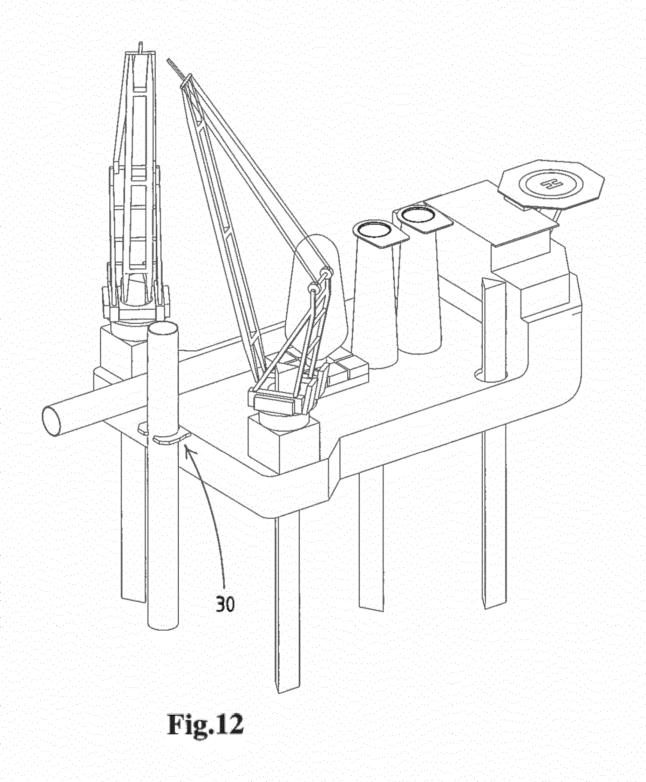

The jack up vessel allows for a method for installation a wind turbine at a wind turbine installation site. More in particular, the jack up vessel shown in figures 1 and 2 allows for a method for installation of a pylon section at an installation site, the method comprising driving the pylon section into the sea floor, an example of which is shown in figures 3-10, and a method for mounting a mast, preferably as part of a preassembled wind turbine, on a pile or jacket at an installation site, an example of which is shown in figures 12-14.

In an embodiment, the method for installation a pylon section of a wind turbine at a wind turbine installation site comprises:
- storing the pylon section 8 on the main deck 7 in a horizontal transport position, in which horizontal transport position the longitudinal axis 18 of the pylon section 8 extends substantially parallel to the main deck and the pylon section guide track 5, and in which horizontal transport position the bottom end 20 of the pylon is supported by the track cart 11 located at the support end 13 of the guide track 5, see figures 1 and 2;
- arranging the vessel 1 adjacent the wind turbine installation site 27 and operating the elevating units 4 to bring the vessel 1 in an operational position wherein the legs 3 engage the sea floor 28 and the hull 2 is above water level 29;
- upending the pylon section 6, to thus bring the pylon section from the horizontal transport position into a vertical installation position, in which vertical installation position the longitudinal axis 18 of the pylon section 8 extends in a substantially vertical direction.

The upending process comprises, at the installation end of the track, lifting the top end of the pylon section with the installation crane, in the embodiment shown installation cranes, in an upward direction while guiding the bottom end of the pylon section along the guide track towards the installation end of the track, the cart supporting the bottom end of the pylon section during the upending process, thereby rotating the pylon section from a horizontal orientation to a vertical orientation about a substantially horizontal rotation axis, which substantially horizontal rotation axis preferably is perpendicular to the longitudinal axis of the vessel,

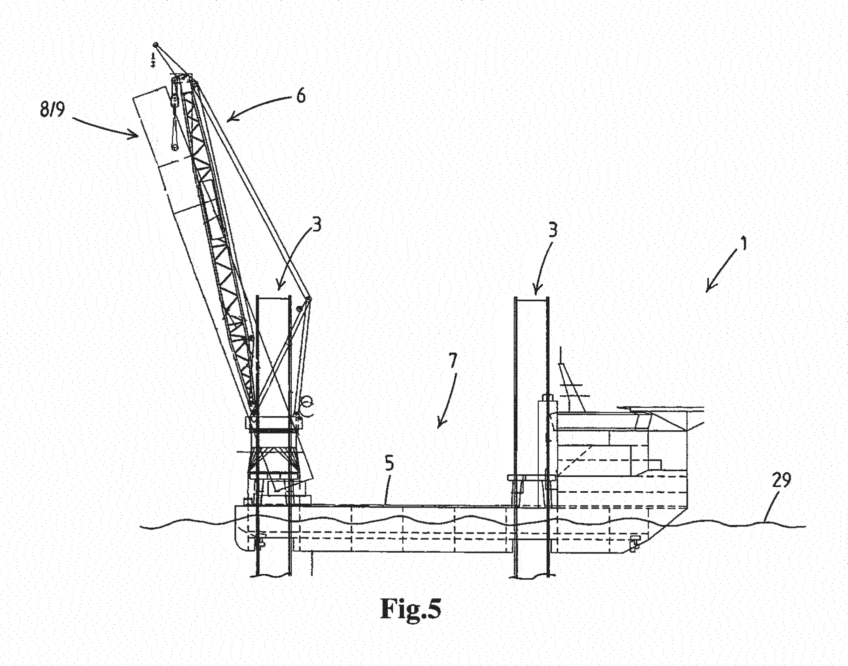

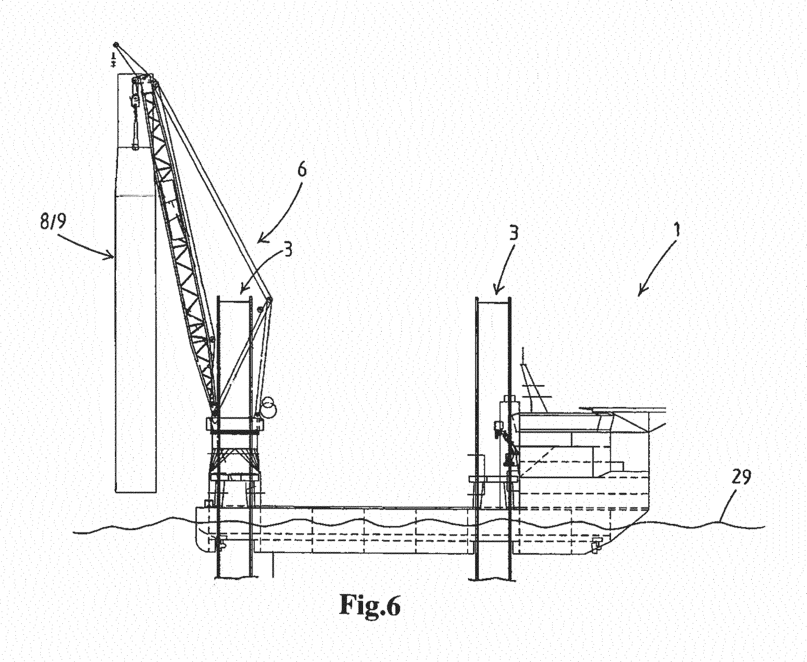

The upending the pylon section ends with the pylon section installation cranes supporting the pylon section in the vertical installation position, follows the condition shown in figure 5, and precedes the condition shown in figure 6, in which the pylon section has been lifted of the vessel and is supported above the installation site.

It is submitted that when the pylon section is a pile, it is to be used as a base onto which a, preferably preassembled wind turbine, is to be installed. A pile is a large and heavy pylon section compared to for example a mast, which is to be mounted on a pile for supporting a nacelle. Because of the weight and size, a pile preferably is first fully upended, while the bottom end of the pile is guided by the track cart, and only after it has been upended is lifted upwards and overboard to be correctly positioned at the installation site for being driven into the sea floor.

Thus, the pile is upended such that it is located above the installation end of the guide track once in the vertical installation position, in which in which vertical installation position the longitudinal axis of the pylon section extends in a substantially vertical direction, which allows the track cart to guide the bottom end of the pylon section during the upending process, and thus prevent the bottom end of pylon section to swing. Guiding the bottom end of the pylon section thus allows for a controlled upending process, in which the position of the pylon section is controlled, the top end by the pylon section installation cranes and the bottom end by the track cart.

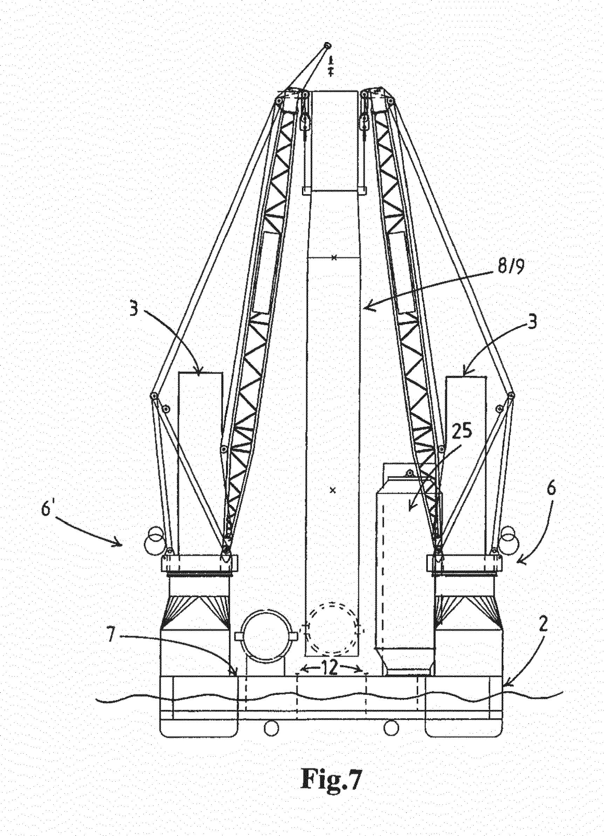

After the upending of the pylon section, the pile holder is disengaged from the bottom end of the pylon section, for example by lifting the pylon section n an upwards direction, and using the installation cranes, preferably by at least slewing the jib of the cranes, to position the pylon section, while supported in a vertical position, above the installation site, which condition is shown in figure 6. Figure 7 shows a rear view of the vessel with the pylon section supported by both the pylon installation cranes.

In the embodiment shown, the vessel 1 comprises a first installation crane 6 and a second installation crane 6'. The two installation cranes are fixed to the hull 12 of the vessel on opposite sides of the guide track 5 at the installation end 14 thereof,

In the embodiment shown, the pylon section installation cranes are around the leg cranes, i.e. are each mounted on the hull of the vessel and around the leg of the jack-up vessel. Furthermore, the cranes are located on opposite sides of the guide track, more in particular the installation end of the guide track for in unison lifting a pylon section of which one end is supported by the track cart, and for lifting the pylon section from the vessel onto an installation site.

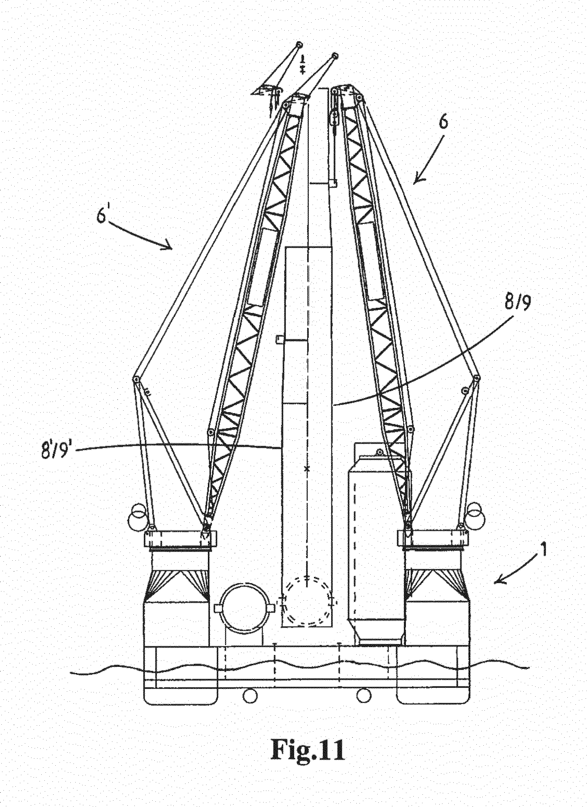

Providing the jack-up vessel with two installation cranes on opposite sides of the guide track allows for the installation cranes to support a pylon section on opposite sides thereof, and thus to, in unison, lift a pylon sections having a length similar to or larger than the length of the jib. Figure 11 shows how a two crane configuration allows for upending larger pylon sections above the guide track. The figure shows on the left a pylon section installation crane configured for solo lifting a pylon section, i.e. without assistance of a second installation crane, and on the right a pylon section installation crane configured for in unison lifting a pylon section, i.e. with the assistance of a second installation crane located on the opposite site of the guide track. In the figure a left half of a relatively short pylon section is shown on the left and half of a relatively large pylon section is shown on the right, both halves being separated by a dotted line.

When the pylon section has to be upended by a single installation crane, the jib of the crane has to be positioned such that the jib, more in particular the top end of the jib, supports the main load above the centre of the pylon section. Thus, the single installation crane is not able to lift a pylon section having a height similar to having the height of the jib into an upright position.

When the pylon section is to be upended by two installation cranes in unison, the jib of the crane can be set a steeper angle, because the top end of the jib can be located alongside the pylon section.

Thus, by providing the vessel with two pylon section installation cranes on opposite sides of the installation end of the guide track, the two installation cranes can be used to in unison lift the pylon section in the upright positon, i.e upend the pylon section out of the horizontal storage position into the vertical storage position, and subsequently lift the pylon section overboard and land it on the sea floor in the upright position for being driven into the sea floor.

In an embodiment, the pylon section installation cranes are used to lower the pylon section onto the sea floor.

In an embodiment the, pylon section is mounted on a pre installed base, for example a subsea template or preinstalled concrete base. In a preferred embodiment, the pylon section is driven into the sea floor, preferably using a pile drive provided by the vessel.

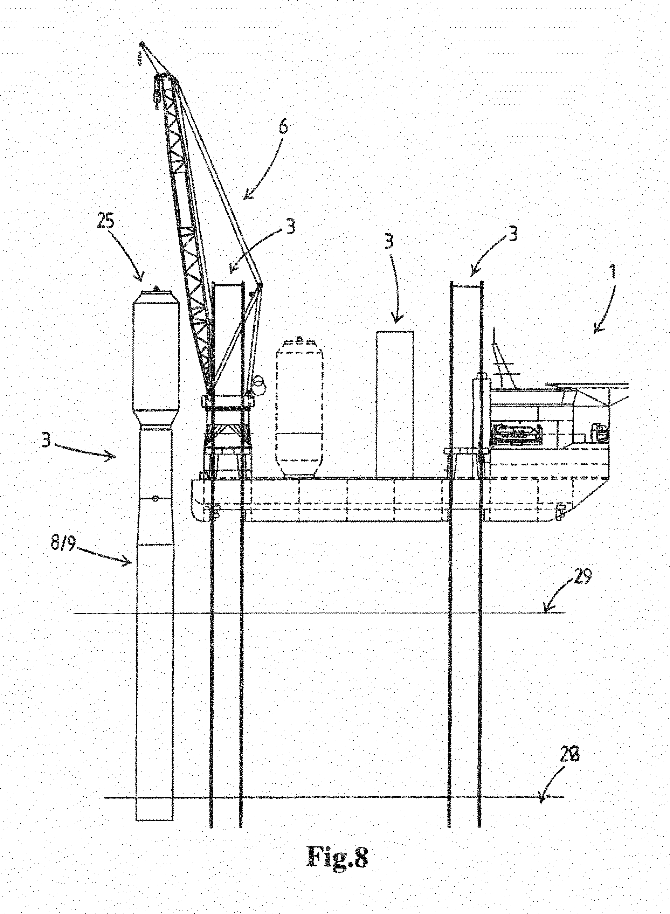

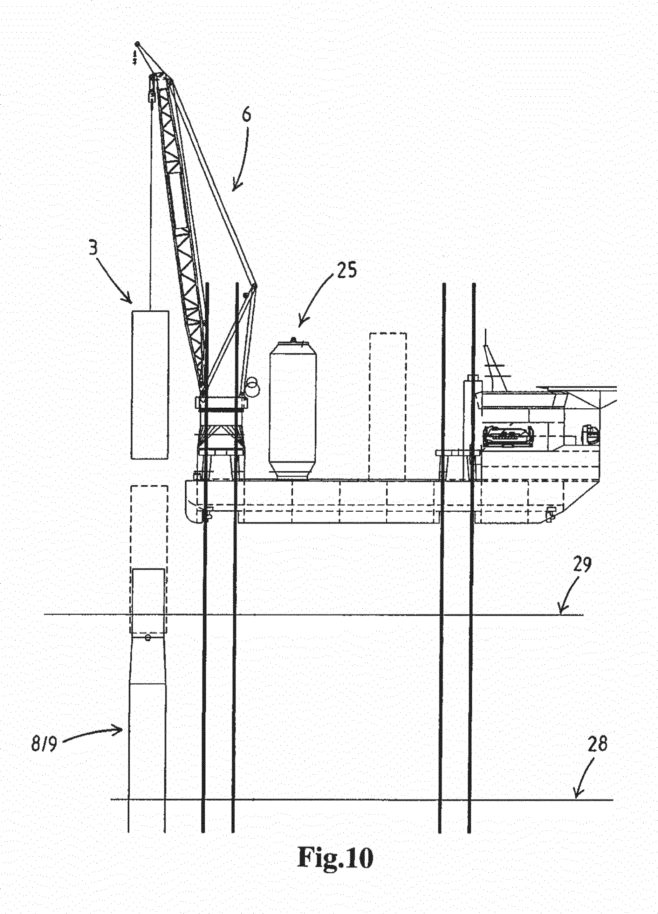

In the embodiment shown, the pylon section 8 is driven into the sea floor 28, using the pile drive 25 stored on the deck of the vessel, which is depicted in figure 8, after which an intermediate pylon section 26 is mounted on top of the pile, which is shown in figure10.

In a further embodiment of a vessel 1, which vessel is provided with a pile guide 30 for positioning the pylon section, more in particular the pile, and for guiding the pile while it is being driven into the sea floor. Figure 12 shows a perspective view of a jack-up vessel 1 comprising a pile guide 30 for guiding the pylon section 8 while it is lowered into the sea and/or while the pylon section is driven into the seafloor using a pile drive.

the pile guide is removable mounted to the hull of the vessel, and can be moved, e.g. pivoted or slid, between a storage position, and an active positon, in which it is shown. In the active position, the pile guide extends beyond the hull of the vessel. Preferably, the pile guide is substantially ring shaped for securing the pylon section along its circumference. In a further embodiment, the pile guide can be opened to allow the pylon section to be inserted in the pile guide in a lateral direction, instead of the pile being lowered in a axial direction into the pile guide.

In an alternative embodiment, the pile guide is part of the track cart and the track cart is used to move the pile guide from a storage position, in which the pile guide is located above the deck of the vessel, into an active position, in which the pile guide is located outside a perimeter of the deck for guiding a pile being lowered towards the sea floor.

The jack up vessel 1 furthermore allows for a method for installation of a wind turbine at a wind turbine installation site. In an embodiment, the mast of the wind turbine is installed first, after which the nacelle is mounted on the mast and the blades are subsequently mounted on the nacelle. The vessel according to the claimed invention however allows for transporting and installing preassembled wind turbines, i.e. a combination of a mast, nacelle and blades, the nacelle and blades being mounted on the mast already.

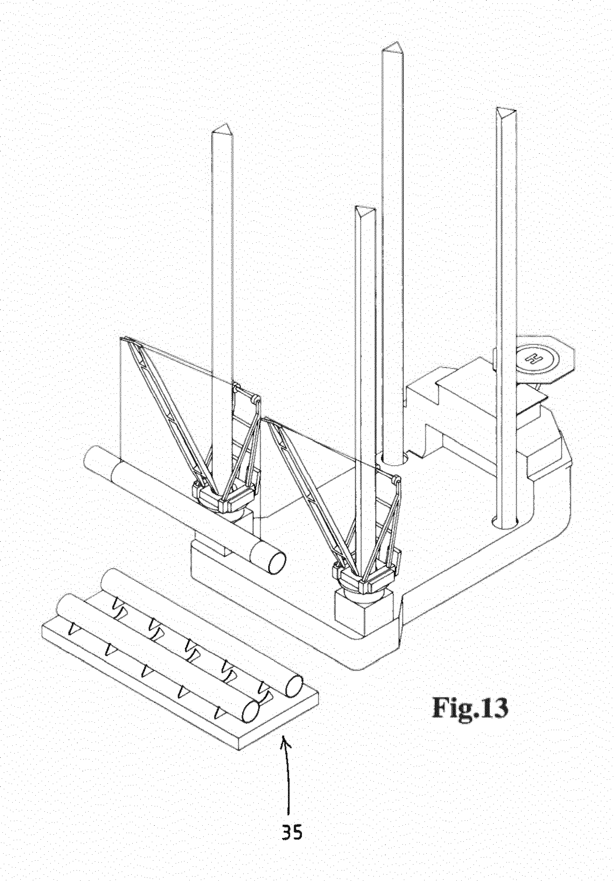

Figure 13 shows a perspective view of a jack-up vessel 1 according to an embodiment of the invention being supplied with pylon sections 8 from a barge 35.

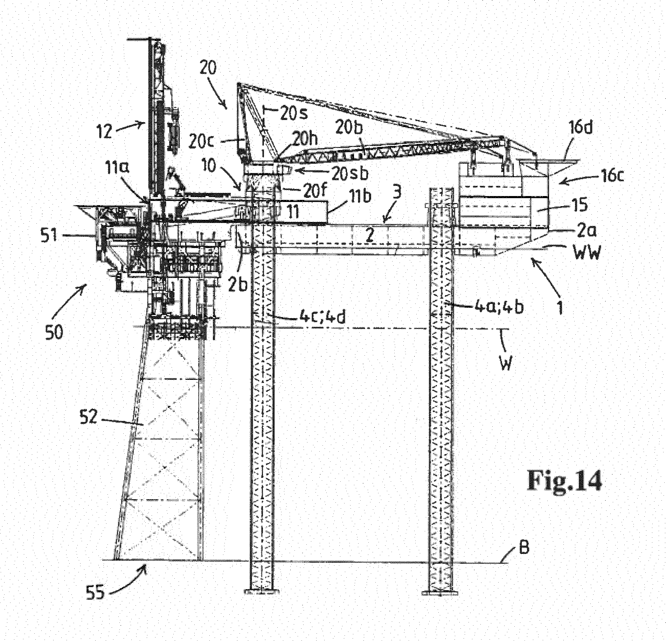

Figures 14-17 show an exemplary embodiment of a vessel 1 provided with a cantilever 10.

In the situation of figure 14 the elevating units have been operated and brought the vessel 1 in an operational position wherein the vessel is not afloat but wherein the jack-up legs 4a, 4b, 4c, 4d engage the seabed B. In the shown embodiment, the feet of the jack-up legs are partly buried in the bottom of the sea B. The hull 2 is above water level W at a height such that a cantilever 10 is movable in an extended positon above the topsides 51 of the offshore platform 50.

The vessel further comprises a cantilever 10 having a cantilever structure 11 with an operational end 11a, wherein said operational end supports a wellbore activities station 12, e.g. a drilling station, or is adapted to support a wellbore activities station thereon, e.g. a mobile drilling station, said cantilever structure 11 having an inner end 11b longitudinally opposite the operational end 11a, wherein the cantilever is movably mounted on the main deck 3 of the hull.

A cantilever motion assembly 13 is provided and adapted to move the cantilever relative to the hull 3 at least in longitudinal direction CL thereof between a retracted position and extended positions wherein the operational end 11a of the cantilever extends beyond a cantilever deployment side of said sides of the hull. In the vessel of figure 14, the cantilever deployment side of the hull is the second axial side 2b.

In figure 14, the cantilever motion assembly has moved the cantilever 10 into an extended position wherein the operational end 11a of the cantilever extends beyond the cantilever deployment side 2, and above the topsides 51. The wellbore activities station 12 is aligned with a wellbore 55 of the offshore platform 50.

This configuration of figure 14 allows the performance of wellbore activities such as drilling and plug and abandonment operations, involving the use of the wellbore activities station.

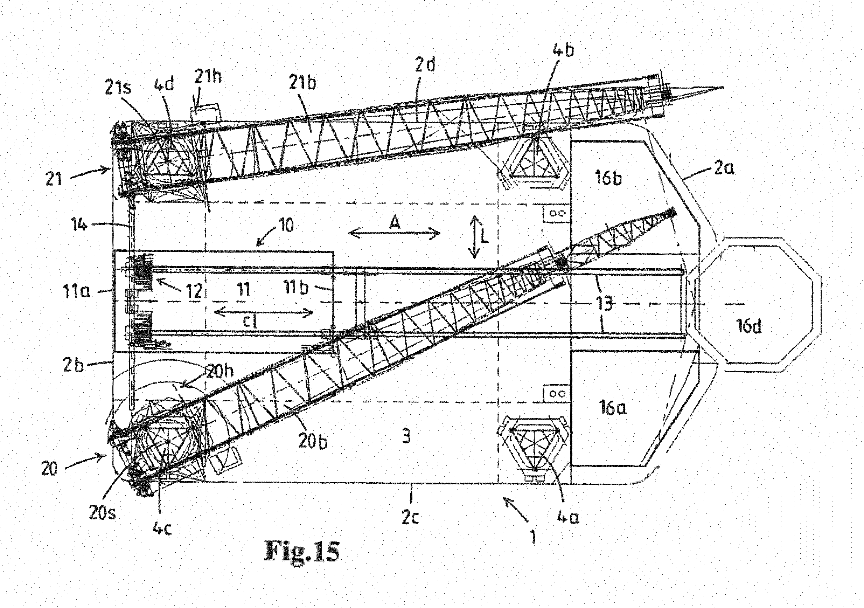

In figure 15, the cantilever 10 is shown in a retracted position. In the shown position, the operational end 11a of the cantilever no longer extends beyond the hull of the vessel.

Here, the cantilever motion assembly comprises the pylon section guide track 5, the guide track having two parallel rails 13, mounted on the main deck 3 allowing movement of the cantilever 10. The rails 13 are mounted in an axial direction A of the hull, perpendicular to the second axial side 2b, and extend in the longitudinal direction CL of the cantilever.

Said one or more rails 13 extend towards or to the first axial side 2a of the hull so as to allow for the cantilever motion assembly to move the cantilever 10 relative to the vessel at least in said longitudinal direction CL between extended positions wherein the operational end 11a of the cantilever extends beyond the second axial side 2b of the hull, a retracted position wherein said operational end 11a is before the second axial side of the hull 2b and the entire cantilever 10 is within the contour of the hull, e.g. the cantilever being within a contour delimited by said jack-up legs.

In addition, also a rail 14 is mounted on said main deck 3 in the lateral direction L of the hull, parallel to and adjacent the second axial side, allowing a lateral movement of the cantilever between multiple extended positions.

Two pylon section installation cranes 20, 21 are fixed to the hull and having a boom 20b, 21b that is slewable about a vertical slew axis 20s, 21s and pivotal up and down about a horizontal boom pivot axis 20h, 21h.

In particular, crane 20 is a first leg encircling crane comprising a foot 20f fixed to the hull, a slew bearing supported on the foot and extending about a jack-up leg 4c of the second pair of jack-up legs of the vessel, a slewable crane member 20sb which is supported by said slew bearing, a boom 20b pivotally mounted to said slewable crane member 20sb about a horizontal boom pivot axis 20h so that the boom is pivotal up and down. The slewable crane member 20sb comprises a protruding superstructure 20c.

Analogously, crane 21 is a second leg encircling crane comprising a foot fixed to the hull, a slew bearing supported on the foot and extending about the other jack-up leg 4d of the second pair of jack-up legs of the vessel, a slewable crane member which is supported by said slew bearing, a boom 21b pivotally mounted to said slewable crane member about a horizontal boom pivot axis 21h so that the boom is pivotal up and down.

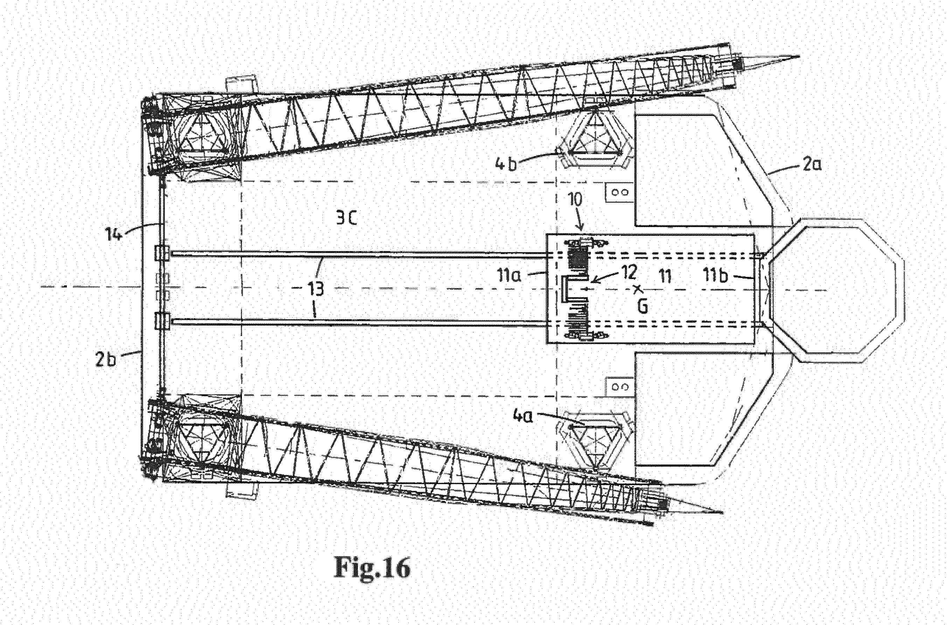

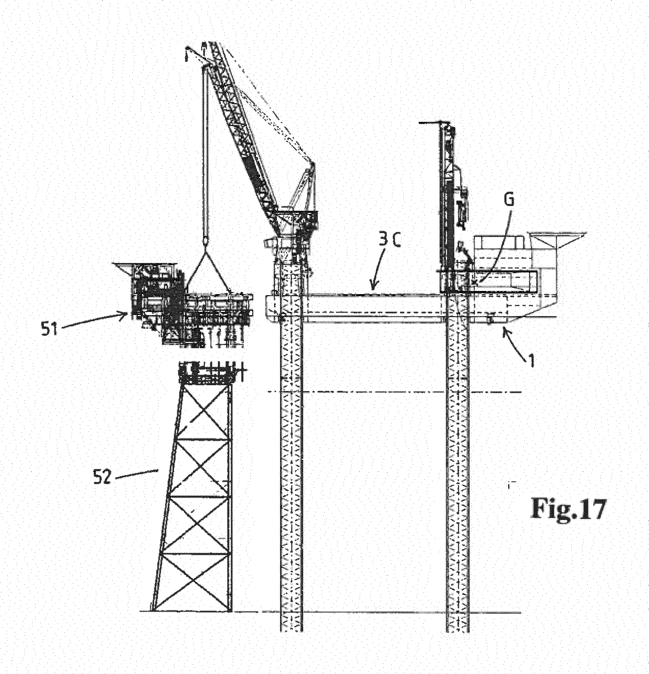

In figure 16, and in figure 17, the cantilever 10 has moved into a deck clearing position wherein a deck area of the main deck is cleared to form a clear deck area 3C between said cantilever 10 and said second axial side 2b.

Figure 17 is a side view of the operational situation of figure 16, with the cantilever 10 in the deck clearing position.

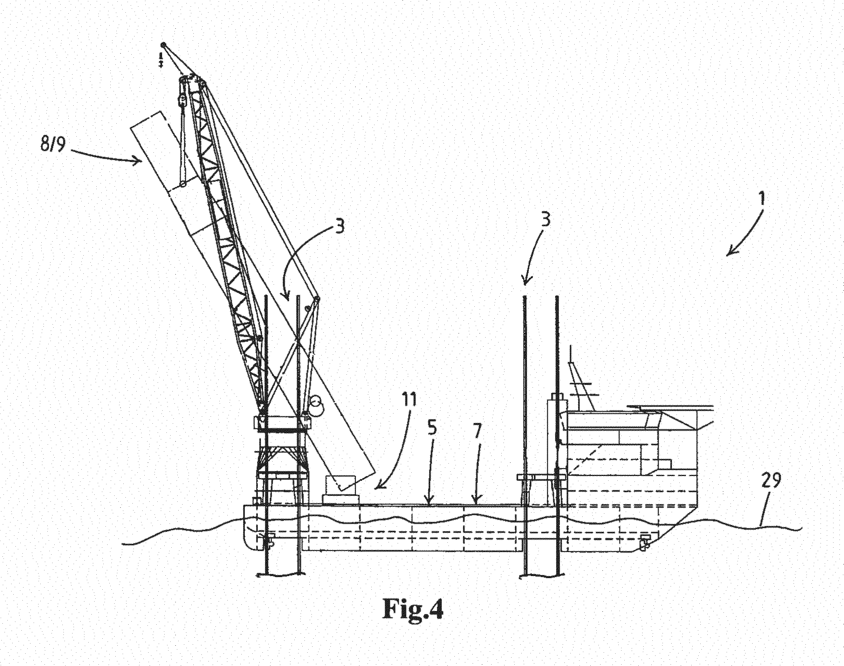

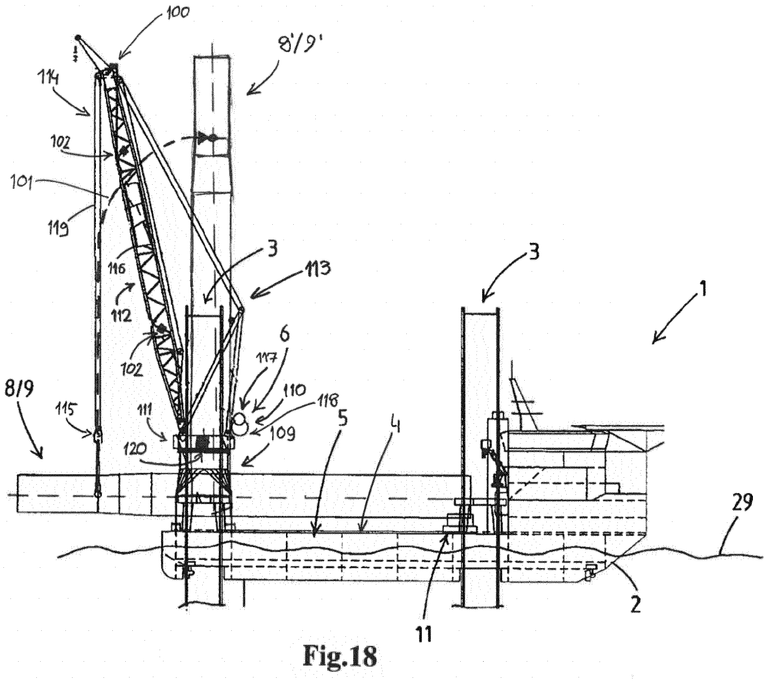

Figure 18 depicts a side view of a jack-up vessel similar to the one of figure 3, shown in a working position during the upending of the pylon section which working positon is after the second working position and prior the third working position, shown in respectively figure 4 and figure 5.

The upending process of the pylon section 8 comprises, at the installation end of the track, lifting the top end of the pylon section 8 with the installation cranes in an upward direction while guiding the bottom end of the pylon section along the guide track towards the installation end of the track, the cart supporting the bottom end of the pylon section during the upending process, which is shown in figures 3-5. Thereby rotating the pylon section from a horizontal orientation to a vertical orientation about a substantially horizontal rotation axis, which substantially horizontal rotation axis preferably is perpendicular to the longitudinal axis of the vessel.

It is submitted that with a preferred upending process according to the invention, the pylon section is upended into an upright position while the lower end of the pylon section is supported by the cart. Once in the upright position, the pylon section is lifted upwards from the cart, such that it is fully supported by the cranes. Subsequently, the cranes move the pylon section from its position above the track cart into the vertical installation position, in which the pylon section has been lifted of the vessel and is supported above the installation site. This is depicted in figure 6.

In the embodiment shown in figure 18 the pylon section installation cranes are provided with a computerized crane control system 120.

Figure 18 depicts the marine jack up vessel 1 according to the invention. The vessel comprises a buoyant hull 2 and pylon section installation cranes 6. The jack up vessel is furthermore provided with pylon section guide track 5 and a track cart 11.

The hull 2 is provided with a main deck 7 configured for storage thereon of the one or more pylon sections 5, in horizontal orientation thereof.

The crane 6 comprises a crane base 109, which crane base 109 is secured to the hull 2, and a slewable superstructure 110 mounted on the crane base 109, and slewable about a vertical slew axis relative to the crane base.

The crane 6 further comprises a slew drive 111, a boom structure 112, a luffing mechanism 113, a hoisting assembly 114 and a load connector 115.

The slew drive 111 is configured to cause slew motion of the superstructure 110 about the slew axis.

The boom structure 112 comprises a boom 116 that is pivotally connected to the superstructure 110, such that it can pivot about a horizontal inner pivot axis.

The luffing mechanism 113 comprising a luffing drive 117 and is configured to cause a luffing motion of the boom structure 112. Thus, the luffing mechanism can be used to pivot the boom upwards or downwards.

The hoisting assembly 114 comprises a hoisting winch 118 and a hoisting winch driven cable 119. In the embodiment shown, the winch driven cable 119 extends in a multi-fall arrangement between a sheave set on the boom structure 112 and a sheave set on the load connector 115.

The crane 6 comprises a computerized crane control system 120 linked to the slew drive 111, the luffing drive 117, and the hoisting winch 118.

The computerized crane control system 120 is programmed to perform a pylon section upending routine providing a coordinated pattern of slew motion of the superstructure 110 and of luffing motion of the boom structure 112, as well as operation of the hoisting winch 118 so that the load connector 115 moves from a foundation pile pick up position 21 thereof, as depicted in figure 3, where the load connector 15 is connected to the top end of a horizontally oriented pylon section stored on the main deck 4, to a position wherein the pylon section is vertically suspended from the load connector 15, outside of the hull 2, which is depicted in figure 6.

The offshore wind turbine installation vessel thus enables a method for installation of a pile adapted to support an offshore wind turbine, according to the invention.

The method comprising the following steps:
a. transporting a pile in a horizontal orientation to an offshore installation site;
b. lifting an upper end portion of the pylon section, with the lower side supported by a cart on the cart track, thereby rotating the pile from a horizontal orientation to a vertical orientation about a substantially horizontal rotation axis perpendicular to the longitudinal axis of the vessel;
after rotating the pile from the horizontal orientation to the vertical orientation, and the pylon section being moved outside the contour of the vessel seen from above to be lowered into the water, or mounted on a jacket.

In the preferred embodiment shown, the computerized crane control system 120 is provided with multiple input devices 100, to track the position of the pylon section.

The crane control system 120 can be used to control the position of the load connector relative to the guide track and the cart during the upending or installation of a pylon section. Thus the crane drive is allowed to control a limited number of parameters, while the system handles another set of parameters of the hoisting process. The control system for example keeps the pylon section aligned with the track, while the crane driver controls the position of the load connector relative to the track, and the speed with which the load connector moves along the predefined trajectory.

The computerized crane control system allows for running sub routines in a hoisting process. For example, the installation routine may comprises the actual upending process, ending in the pile being supported in the upright position, after which the crane driver takes over and hoists the pile into a position for landing the pile in the pile gripper, after which a pile gripper landing routine is run that moves the pile into the pile gripper, after which the crane driver again takes over and lowers the pile towards the sea floor.

Because the trajectory of the load connector can be controlled using the computerized crane control system, the installation routine can be set up to move the load connectors of the pylon section installation cranes along the ideal path, depicted in figure 18 with line 101. Thus, the operational window of the cranes can be used optimally, and it is no longer required to use for example a crane that can handle at least two times the load that is actually being hoisted.

In the preferred embodiment shown, the cranes are provided with a multiple scanners 102 that provide spatial information on objects located in the crane working area, e.g. the top end of a pile or a leg of the jack up vessel.

In the embodiment shown, the cart of the vessel comprises an upending cradle configured to support the lower end of the pylon section during the upending process. More in particular, the upending cradle is configured to assist in the upending process by guiding the pivoting movement of the lower end of the pile along the track during the upending process.

The computerized crane control system is programmed to perform a pylon section up-ending routine that is configured to move the top end of the pile along a fixed trajectory relative to the upending cradle. It is submitted that an optimal trajectory of the load connector allows for minimizing the loads exerted on the upending cradle in the horizontal plane.

This is in particular the case when the upending cradle comprises a pivotably supported clamp, to secure the bottom section of the pile relative to an upending pivot axis. Moving the top end of the pile along the curved trajectory 101 having the pivot point at its centre minimises loads on the upending cradle. The curved trajectory of movement 101 of the load connector lies within a plane that is perpendicular to the pivot axis. Thus, forces directed perpendicular to that plane, i.e. for example parallel to the pivot axis, can be kept to a minimum.

However, performing such an exact hoisting movement is difficult for a crane driver, because it involves a combination of slewing, luffing and hoisting movements. The programmable computerized crane control system enables a fully controlled movement of the load connector, and thus for a minimal load on the upending cradle. The latter can thus be of a compact, low weight design.

In the embodiment shown, the jack up vessel provided with an upending cradle track, and the upending cradle is mounted on that cradle track and is configured to move along a track, during the upending of the foundation pile. By thus moving the cradle, the top end of the pile can initially be lifted in a purely vertical direction, which facilitates the lifting process. The installation routine is used to adjust the hoisting speed such that it keeps up with the movement of the upending cradle along the track. In an embodiment, the cradle is provided with a drive, for enabling controlled movement of the cradle along the track, and the computerized crane control system is configured to at least monitor the movement of the cradle, preferably control the drive and thus control the movement of the cradle along the track. Once the crat reaches the installation end of the guide track, the top end of the pylon section us moved along a curved trajectory to fully up end the pylon section. In an alternative method, the cart is moved during the entire upending process, and the load connector follows a curved trajectory.

## Claims

1. Method for installing a pylon section of a wind turbine at a wind turbine installation site, wherein use is made of a marine jack-up type vessel (1), the jack-up vessel comprising:
- a buoyant hull (2) with a main deck for storing the pylon section (8) during transport, the pylon section having a longitudinal axis extending between a top end (19) of the pylon section and a bottom end (20) of the pylon section;
- at least three jack-up legs (3);
- a plurality of elevating units (4), each associated with a respective jack-up leg (3), adapted to move the respective jack-up leg vertically relative to the hull (2) and to bring the vessel (1) in an operational position wherein the legs engage the sea floor and the hull is above water level;
- a pylon section guide track (5) and an associated track cart (11), wherein the guide track (5) is located on or in the main deck (7) and extends between a support end (13) of the guide track and an installation end (14) of the guide track, and wherein the track cart (11) comprises a pylon holder for engaging the bottom end (20) of the pylon section to support that bottom end of the pylon section and to guide the bottom end of the pylon section (8) over the deck and along the guide track; and
- a pylon section installation crane (6, 06'), which installation crane is fixed to the hull at the installation end (14) of the guide track (5) for lifting the pylon section (8), of which one end is supported by the track cart (11), the installation crane having a boom (24) that is slewable about a vertical slew axis (25) and pivotal up and down about a horizontal boom pivot axis (26),
**characterized, in that** the method comprises:
- storing the pylon section (8) on the main deck (7) in a horizontal transport position, in which horizontal transport position the longitudinal axis of the pylon section extends substantially parallel to the main deck and to the guide track (5), and in which horizontal transport position the bottom end (20) of the pylon section (8) is supported by the track cart (11) located at the support end (13) of the guide track (5);
- arranging the vessel (1) adjacent the wind turbine installation site (27) and operating the elevating units to bring the vessel in an operational position, in which operational position the legs engage the sea floor and the hull is above water level;
- upending the pylon section (8), to thus bring the pylon section from the horizontal transport position into a vertical installation position, in which vertical installation position the longitudinal axis of the pylon section extends in a substantially vertical direction;
the upending process comprising, at the installation end (14) of the guide track (5), lifting the top end (19) of the pylon section (8) with the installation crane (6) in an upward direction while guiding the bottom end (20) of the pylon section along the guide track towards the installation end (14) of the guide track, the track cart (11) supporting the bottom end of the pylon section during the upending process, thereby rotating the pylon section from a horizontal orientation to a vertical orientation about a substantially horizontal rotation axis, which substantially horizontal rotation axis preferably is perpendicular to the longitudinal axis of the vessel (1);
- disengaging the pylon holder from the bottom end (20) of the pylon section (8), lifting the pylon section with the installation crane (6) in an upward direction, and using the installation crane to position the pylon section, while supported in a vertical position, above the installation site; and
- lower the pylon section (8) into an installed position at the installation site (27); and
- operating the elevating units so as to lower the buoyant hull (2) of the vessel (1) into the sea and to retract the jack-up legs (3) upward.

2. Method according to claim 1, wherein the cart (11) is provided with a pivotable cradle, for engaging a bottom end (20) of the pylon section (8), and for pivoting with the pylon section while it is upended, to continuously guide and support the pylon section at the bottom end during the upending process.

3. Method according to one or more of the preceding claims, the method comprising storing at least one pile (9) on the deck of the vessel (1), which at least one pile is stored in the horizontal transport position, in which it is located above the guide track (5), the pile having a length of at least 90 meters, more preferably having a length of at least 100 meters.

4. Method according to claim 3, wherein the bottom end of the pile (9) in the transport position is located at the support end of the guide track (5) and the top end of the pile extends overboard at the installation end of the guide track.

5. Marine jack-up type vessel (1) for installing a pylon section (8) of a wind turbine at a wind turbine installation site (27), the jack-up vessel comprising:
- a buoyant hull (2) with a main deck (7) for storing the pylon section (8) during transport, the pylon section having a longitudinal axis extending between a top end of the pylon section and a bottom end (20) of the pylon section;
- at least three jack-up legs (3);
- a plurality of elevating units (4), each associated with a respective jack-up leg (3), adapted to move the respective jack-up leg vertically relative to the hull (2) and to bring the vessel (1) in an operational position wherein the legs engage the sea floor and the hull is above water level;
- a pylon section guide track (5) and an associated track cart (11),
wherein the guide track (5) is located on or in the main deck (7) and extends between a support end (13) of the guide track and an installation end (14) of the guide track, and wherein the track cart (11) comprises a pylon holder for engaging the bottom end (20) of the pylon section (8); and
- a pylon section installation crane (6, 06'), which installation crane is fixed to the hull of the vessel (1) at the installation end (14) of the guide track (5) for lifting the pylon section (8), of which one end is at least partially supported by the track cart (11), the installation crane having a boom (24) that is slewable about a vertical slew axis (26) and pivotal up and down about a horizontal boom pivot axis (26),
**characterized, in that** the pylon holder is configured to guide the bottom end (20) of the pylon section (8) along the guide track (5), preferably from the support end to the installation end, while the pylon section is upended from a horizontal transport position into an installation position, in which installation positon the pylon section has a vertical orientation and is at least partially supported by the pylon holder.

6. Vessel according to claim 5, wherein the pylon holder is configured to move, preferably pivot, between
a first position, for at least partially supporting the pylon section (8) at the bottom end (20) thereof, when the pylon section is in the horizontal transport position, in which horizontal transport position the pylon section has an essentially horizontal orientation and
a second position, for at least partially supporting the pylon section (8) at the bottom end (20) thereof, when the pylon section is in the installation position.

7. Vessel according to one or more of the claims 5-6, wherein the vessel (1) furthermore comprises a pylon section top end support, which top end support is located at the installation end (14) of the guide track (5) for engaging the top end (19) of the pylon section (8) when the pylon section is in a horizontal transport position, in which horizontal transport position the longitudinal axis (18) of the pylon section extends substantially parallel to the main deck (7) and the guide track, and preferably wherein the pylon section top end support is removable mounted on the deck of the vessel or on the guide track.

8. Vessel according to one or more of the claims 5-7, wherein the track cart (11) is provided with a cart drive for controlled movement of the cart along the guide track (5) during the upending process, e.g. wherein the cart comprises a drive with a sprocket that cooperates with a rack extending along the guide track, and
preferably, the cart is provided with a pivotably mounted cradle or pylon holder for supporting the pile section, and a cradle drive for pivoting the cradle with the pile during the up-ending process.

9. Vessel according to one or more of the claims 5-8, wherein the vessel (1) comprises a pylon section storage location on at least one side of the guide track (5), for supporting a pylon section (8) in a horizontal storage position in which a longitudinal axis (18) of the pylon section (8) extends parallel to the guide track and parallel to a pylon section in the horizontal transport position on the transport track, and
wherein the vessel comprises a pylon section transfer device, e.g. one or more cranes or a transfer track with one or more track carts, for transferring a pylon section from the horizontal storage position into the horizontal transport position.

10. vessel according to claim 9, wherein the vessel (1) further compromises at least a top transfer track and a bottom transfer track, the top transfer track and the bottom transfer track extending substantially perpendicular to the guide track (5), and the top transfer track and the bottom transfer track comprising at least one top transfer cart and at least one bottom transfer cart for supporting a pylon section (8) at the top (19) and at the bottom (20) respectively, for moving the pylon section into and out of the horizontal transport position on the guide track

11. Vessel according to one or more of the claims 5-10, wherein the guide track (5) and the track cart (11), are configured to support the pylon section (8) in the horizontal transport position such that the longitudinal axis of the pylon section (18) extends parallel to a longitudinal axis of the vessel (15) and preferably is located at the centre of the vessel.

12. Vessel according to one or more of the claims 5-11, wherein the guide track (5) and the track cart (11), are configured to support the pylon section (8), when in the horizontal transport position, with the top end (19) located near the installation crane (6, 6') and an installation edge of the deck, i.e. the edge of the deck over which the pylon section will be lifted off the vessel, and the bottom end (20) located away from the installation crane and the installation edge of the vessel.

13. Vessel according to one or more of the claims 5-12, wherein the installation end (14) of the guide track (5) is located at an installation side of the main deck (7) of the vessel (1), and wherein preferably the guide track extends perpendicular to the installation side of the main deck of the vessel.

14. Vessel according to one or more of the claims 5-13, wherein the vertical slew axis of the respective installation cranes (6, 6') define a virtual plane, and wherein an installation side of the main deck (7) of the vessel (1) is located at an installation side of the virtual plane and the main deck is located at a deck side of the virtual plane.

## Patentansprüche

1. Verfahren zum Installieren eines Pylonabschnitts einer Windturbine an einem Windturbinen-Installationsort, wobei ein Schiff vom Typ eines Hubschiffs (1) verwendet wird, wobei das Hubschiff umfasst:
- einen schwimmfähigen Rumpf (2) mit einem Hauptdeck zur Lagerung des Pylonabschnitts (8) während des Transports, wobei der Pylonabschnitt eine Längsachse aufweist, die sich zwischen einem oberen Ende (19) des Pylonabschnitts und einem unteren Ende (20) des Pylonabschnitts erstreckt;
- mindestens drei Jack-Up-Beine (3);
- eine Vielzahl von Hebeeinheiten (4), von denen jede einem entsprechenden Jack-up-Bein (3) zugeordnet ist und die geeignet sind, das entsprechende Jack-up-Bein vertikal relativ zu dem Rumpf (2) zu bewegen und das Schiff (1) in eine Betriebsposition zu bringen, in der sich die Beine in Eingriff mit dem Meeresboden befinden und der Rumpf über dem Wasserspiegel liegt;
- eine Pylonabschnitt-Führungsschiene (5) und einen zugehörigen Schienenwagen (11), wobei die Führungsschiene (5) auf oder in dem Hauptdeck (7) angeordnet ist und sich zwischen einem Halteende (13) der Führungsschiene und einem Installationsende (14) der Führungsschiene erstreckt, und wobei der Schienenwagen (11) einen Pylonhalter für den Eingriff mit dem unteren Ende (20) des Pylonabschnitts umfasst, um dieses untere Ende des Pylonabschnitts zu halten und das untere Ende des Pylonabschnitts (8) über das Deck und entlang der Führungsschiene zu führen; und
- einen Pylonabschnitt-Installationskran (6, 06'), wobei der Installationskran an dem Installationsende (14) der Führungsschiene (5) an dem Rumpf befestigt ist, um den Pylonabschnitt (8) anzuheben, dessen eines Ende von dem Schienenwagen (11) gehalten wird, wobei der Installationskran einen Ausleger (24) aufweist, der um eine vertikale Schwenkachse (25) schwenkbar und um eine horizontale Auslegerschwenkachse (26) nach oben und nach unten schwenkbar ist,
**dadurch gekennzeichnet, dass** das Verfahren umfasst:
- Lagern des Pylonabschnitts (8) auf dem Hauptdeck (7) in einer horizontalen Transportposition, wobei sich die Längsachse des Pylonabschnitts in dieser horizontalen Transportposition im Wesentlichen parallel zu dem Hauptdeck und zu der Führungsschiene (5) erstreckt, und wobei das untere Ende (20) des Pylonabschnitts (8) in dieser horizontalen Transportposition von dem an dem Halteende (13) der Führungsschiene (5) angeordneten Schienenwagen (11) gehalten wird;
- Anordnen des Schiffes (1) in der Nähe des Windturbinen-Installationsortes (27) und Betätigen der Hebeeinheiten, um das Schiff in eine Betriebsposition zu bringen, wobei sich die Beine in der Betriebsposition mit dem Meeresboden in Eingriff befinden und der Rumpf über dem Wasserspiegel liegt;
- Aufrichten des Pylonabschnitts (8), um so den Pylonabschnitt aus der horizontalen Transportposition in eine vertikale Installationsposition zu bringen, wobei sich in der vertikalen Installationsposition die Längsachse des Pylonabschnitts in einer im Wesentlichen vertikalen Richtung erstreckt;
wobei der Aufrichtvorgang umfasst an dem Installationsende (14) der Führungsschiene (5) Anheben des oberen Endes (19) des Pylonabschnitts (8) mit dem Installationskran (6) in einer Aufwärtsrichtung, während das untere Ende (20) des Pylonabschnitts entlang der Führungsschiene in Richtung des Installationsendes (14) der Führungsschiene geführt wird, wobei der Schienenwagen (11) das untere Ende des Pylonabschnitts während des Aufrichtvorgangs hält, wodurch der Pylonabschnitt von einer horizontalen Ausrichtung in eine vertikale Ausrichtung um eine im Wesentlichen horizontale Drehachse gedreht wird, wobei die im Wesentlichen horizontale Drehachse vorzugsweise senkrecht zu der Längsachse des Schiffes (1) verläuft;
- Außer-Eingriff-Bringen des Pylonhalters von dem unteren Ende (20) des Pylonabschnitts (8), Anheben des Pylonabschnitts mit dem Installationskran (6) in einer Aufwärtsrichtung und Verwenden des Installationskrans, um den Pylonabschnitt, während er in einer vertikalen Position gehalten wird, über dem Installationsort zu positionieren; und
- Absenken des Pylonabschnitts (8) in eine installierte Position an dem Installationsort (27); und
- Betätigen der Hebeeinheiten, um den schwimmfähigen Rumpf (2) des Schiffes (1) in das Meer abzusenken und die Jack-up-Beine (3) nach oben zu ziehen.

2. Verfahren nach Anspruch 1, wobei der Wagen (11) mit einem schwenkbaren Gestell versehen ist, um mit einem unteren Ende (20) des Pylonabschnitts (8) in Eingriff zu kommen und um sich mit dem Pylonabschnitt zu drehen, während dieser aufgerichtet wird, um den Pylonabschnitt während des Aufrichtvorgangs kontinuierlich an dem unteren Ende zu führen und zu halten.

3. Verfahren nach einem oder mehreren der vorhergehenden Ansprüche, wobei das Verfahren ein Lagern mindestens eines Pfahls (9) auf dem Deck des Schiffes (1) umfasst, wobei der mindestens eine Pfahl in der horizontalen Transportposition gelagert wird, in der er sich oberhalb der Führungsschiene (5) befindet, wobei der Pfahl eine Länge von mindestens 90 Metern, vorzugsweise eine Länge von mindestens 100 Metern aufweist.

4. Verfahren nach Anspruch 3, wobei sich das untere Ende des Pfahls (9) in der Transportposition an dem Halteende der Führungsschiene (5) befindet und sich das obere Ende des Pfahls an dem Installationsende der Führungsschiene über Bord erstreckt.

5. Schiff vom Typ Hubschiff (1) zum Installieren eines Pylonabschnitts (8) einer Windturbine an einem Windturbinen-Installationsort (27), wobei das Hubschiff umfasst:
- einen schwimmfähigen Rumpf (2) mit einem Hauptdeck (7) zur Lagerung des Pylonabschnitts (8) während des Transports, wobei der Pylonabschnitt eine Längsachse aufweist, die sich zwischen einem oberen Ende des Pylonabschnitts und einem unteren Ende (20) des Pylonabschnitts erstreckt;
- mindestens drei Jack-up-Beine (3);
- eine Vielzahl von Hebeeinheiten (4), von denen jede einem entsprechenden Jack-up-Bein (3) zugeordnet ist und die geeignet sind, das entsprechende Jack-up-Bein vertikal relativ zu dem Rumpf (2) zu bewegen und das Schiff (1) in eine Betriebsposition zu bringen, in der sich die Beine in Eingriff mit dem Meeresboden befinden und der Rumpf über dem Wasserspiegel liegt;
- eine Pylonabschnitt-Führungsschiene (5) und einen zugehörigen Schienenwagen (11),
wobei die Führungsschiene (5) auf oder in dem Hauptdeck (7) angeordnet ist und sich zwischen einem Halteende (13) der Führungsschiene und einem Installationsende (14) der Führungsschiene erstreckt, und wobei der Schienenwagen (11) einen Pylonhalter für den Eingriff mit dem unteren Ende (20) des Pylonabschnitts (8) umfasst; und
- einen Pylonabschnitt-Installationskran (6, 06'), wobei der Installationskran an dem Installationsende (14) der Führungsschiene (5) an dem Rumpf des Schiffes (1) befestigt ist, um den Pylonabschnitt (8) anzuheben, dessen eines Ende zumindest teilweise durch den Schienenwagen (11) gehalten wird, wobei der Installationskran einen Ausleger (24) aufweist, der um eine vertikale Schwenkachse (26) schwenkbar und um eine horizontale Auslegerschwenkachse (26) nach oben und nach unten schwenkbar ist,
**dadurch gekennzeichnet, dass** der Pylonhalter ausgestaltet ist, um das untere Ende (20) des Pylonabschnitts (8) entlang der Führungsschiene (5), vorzugsweise von dem Halteende zu dem Installationsende, zu führen, während der Pylonabschnitt von einer horizontalen Transportposition in eine Installationsposition aufgerichtet wird, wobei der Pylonabschnitt in dieser Installationsposition eine vertikale Ausrichtung hat und zumindest teilweise durch den Pylonhalter gehalten wird.

6. Schiff nach Anspruch 5, wobei der Pylonhalter ausgestaltet ist, um sich zwischen
einer ersten Position, um den Pylonabschnitt (8) an seinem unteren Ende (20) zumindest teilweise zu halten, wenn sich der Pylonabschnitt in der horizontalen Transportposition befindet, wobei der Pylonabschnitt in dieser horizontalen Transportposition eine im Wesentlichen horizontale Ausrichtung aufweist, und einer zweiten Position, um den Pylonabschnitt (8) an seinem unteren Ende (20) zumindest teilweise zu halten, wenn sich der Pylonabschnitt in der Installationsposition befindet, zu bewegen, vorzugsweise zu schwenken.

7. Schiff nach einem oder mehreren der Ansprüche 5 bis 6, wobei das Schiff (1) darüber hinaus eine Halterung für das obere Ende des Pylonabschnitts umfasst, wobei sich die Halterung für das obere Ende an dem Installationsende (14) der Führungsschiene (5) befindet, um mit dem oberen Ende (19) des Pylonabschnitts (8) in Eingriff zu kommen, wenn sich der Pylonabschnitt in einer horizontalen Transportposition befindet, wobei sich die Längsachse (18) des Pylonabschnitts in der horizontalen Transportposition im Wesentlichen parallel zu dem Hauptdeck (7) und zu der Führungsschiene erstreckt, und wobei die Halterung für das obere Ende des Pylonabschnitts vorzugsweise abnehmbar auf dem Deck des Schiffes oder auf der Führungsschiene montiert ist.

8. Schiff nach einem oder mehreren der Ansprüche 5-7, wobei der
Schienenwagen (11) mit einem Wagenantrieb zur kontrollierten Bewegung des Wagens entlang der Führungsschiene (5) während des Aufrichtvorgangs versehen ist, wobei z.B. der Wagen einen Antrieb mit einem Zahnrad umfasst, das mit einer sich entlang der Führungsschiene erstreckenden Zahnstange zusammenwirkt, und
wobei der Wagen vorzugsweise mit einem schwenkbar angebrachten Gestell oder Pylonhalter zum Halten des Pfahlabschnitts und einem Gestellantrieb zum Schwenken des Gestells mit dem Pfahl während des Aufrichtvorgangs versehen ist.

9. Schiff nach einem oder mehreren der Ansprüche 5-8, wobei das Schiff (1) auf mindestens einer Seite der Führungsschiene (5) einen Pylonabschnitt-Lagerplatz umfasst, um einen Pylonabschnitt (8) in einer horizontalen Lagerposition zu halten, in der eine Längsachse (18) des Pylonabschnitts (8) parallel zu der Führungsschiene und parallel zu einem Pylonabschnitt in der horizontalen Transportposition auf der Transportschiene verläuft, und
wobei das Schiff eine Pylonabschnitt-Umsetzungseinrichtung z.B. einen oder mehrere Kräne oder eine Umsetzungsschiene mit einem oder mehreren Schienenwagen zum Umsetzen eines Pylonabschnitts aus der horizontalen Lagerposition in die horizontale Transportposition umfasst.

10. Schiff nach Anspruch 9, wobei das Schiff (1) darüber hinaus mindestens eine obere Umsetzungsschiene und eine untere Umsetzungsschiene umfasst, wobei sich die obere Umsetzungsschiene und die untere Umsetzungsschiene im Wesentlichen senkrecht zu der Führungsschiene (5) erstrecken und die obere Umsetzungsschiene und die untere Umsetzungsschiene mindestens einen oberen Umsetzungswagen und mindestens einen unteren Umsetzungswagen umfassen, um einen Pylonabschnitt (8) oben (19) bzw. unten (20) zu halten, um den Pylonabschnitt in die bzw. aus der horizontalen Transportposition auf der Führungsschiene zu bewegen.

11. Schiff nach einem oder mehreren der Ansprüche 5-10, wobei die Führungsschiene (5) und der Schienenwagen (11) ausgestaltet sind, um den Pylonabschnitt (8) in der horizontalen Transportposition zu halten, so dass sich die Längsachse des Pylonabschnitts (18) parallel zu einer Längsachse des Schiffs (15) erstreckt und sich vorzugsweise in der Mitte des Schiffs befindet.

12. Schiff nach einem oder mehreren der Ansprüche 5-11, wobei die Führungsschiene (5) und der Schienenwagen (11) ausgestaltet sind, um den Pylonabschnitt (8) in der horizontalen Transportposition halten, wobei sich das obere Ende (19) in der Nähe des Installationskrans (6, 6') und einem Installationsrand des Decks befindet, d.h. dem Rand des Decks, über den der Pylonabschnitt von dem Schiff gehoben wird, und wobei das untere Ende (20) von dem Installationskran und dem Installationsrand des Schiffs entfernt ist.

13. Schiff nach einem oder mehreren der Ansprüche 5-12, wobei sich das Installationsende (14) der Führungsschiene (5) an einer Installationsseite des Hauptdecks (7) des Schiffes (1) befindet, und wobei sich die Führungsschiene vorzugsweise senkrecht zu der Installationsseite des Hauptdecks des Schiffes erstreckt.

14. Schiff nach einem oder mehreren der Ansprüche 5-13, wobei die vertikalen Schwenkachsen der jeweiligen Installationskräne (6, 6') eine virtuelle Ebene definieren, und wobei sich eine Installationsseite des Hauptdecks (7) des Schiffes (1) an einer Installationsseite der virtuellen Ebene befindet und sich das Hauptdeck an einer Deckseite der virtuellen Ebene befindet.

## Revendications

1. Procédé pour installer une section de pylône d'une éolienne sur un site d'installation d'éolienne, dans lequel on utilise un navire de type autoélévateur (1), le navire autoélévateur comprenant :
une coque flottante (2) avec un pont principal pour stocker la section de pylône (8) pendant le transport, la section de pylône ayant un axe longitudinal s'étendant entre une extrémité supérieure (19) de la section de pylône et une extrémité inférieure (20) de la section de pylône ;
au moins trois jambes autoélévatrices (3) ;
une pluralité d'unités d'élévation (4), chacune associée à une jambe autoélévatrice (3) respective, adaptée pour déplacer la jambe autoélévatrice respective verticalement par rapport à la coque (2) et pour amener le navire (1) dans une position opérationnelle dans laquelle les jambes mettent en prise le plancher marin et la coque est au-dessus du niveau de l'eau ;
un rail de guidage de section de pylône (5) et un chariot de rail (11) associé, dans lequel le rail de guidage (5) est positionné sur ou dans le pont principal (7) et s'étend entre une extrémité de support (13) du rail de guidage et une extrémité d'installation (14) du rail de guidage, et dans lequel le chariot de rail (11) comprend un support de pylône pour mettre en prise l'extrémité inférieure (20) de la section de pylône afin de supporter cette extrémité inférieure de la section de pylône et afin de guider l'extrémité inférieure de la section de pylône (8) sur le pont et le long du rail de guidage ; et
une grue d'installation de section de pylône (6, 06'), laquelle grue d'installation est fixée sur la coque au niveau de l'extrémité d'installation (14) du rail de guidage (5) pour lever la section de pylône (8), dont une extrémité est supportée par le chariot de rail (11), la grue d'installation ayant une flèche (24) qui peut pivoter autour d'un axe de pivotement vertical (25) et pivotant vers le haut et vers le bas autour d'un axe de pivot de flèche horizontal (26),
**caractérisé en ce que** le procédé comprend les étapes consistant à :
stocker la section de pylône (8) sur le pont principal (7) dans une position de transport horizontale, dans laquelle position de transport horizontale, l'axe longitudinal de la section de pylône s'étend sensiblement parallèlement au pont principal et au rail de guidage (5), et dans laquelle position de transport horizontale, l'extrémité inférieure (20) de la section de pylône (8) est supportée par le chariot de rail (11) positionné au niveau de l'extrémité de support (13) du rail de guidage (5) ;
agencer le navire (1) de manière adjacente au site d'installation d'éolienne (27) et actionner les unités d'élévation pour amener le navire dans une position opérationnelle, dans laquelle position opérationnelle, les jambes mettent en prise le plancher marin et la coque est au-dessus du niveau de l'eau ;
renverser la section de pylône (8), afin d'amener ainsi la section de pylône de la position de transport horizontale dans une position d'installation verticale, dans laquelle position d'installation verticale, l'axe longitudinal de la section de pylône s'étend dans une direction sensiblement verticale ;
le processus de renversement comprenant, au niveau de l'extrémité d'installation (14) du rail de guidage (5), l'étape consistant à lever l'extrémité supérieure (19) de la section de pylône (8) avec la grue d'installation (6) dans une direction ascendante tout en guidant l'extrémité inférieure (20) de la section de pylône le long du rail de guidage vers l'extrémité d'installation (14) du rail de guidage, le chariot de rail (11) supportant l'extrémité inférieure de la section de pylône pendant le processus de renversement, faisant ainsi tourner la section de pylône d'une orientation horizontale à une orientation verticale autour d'un axe de rotation sensiblement horizontal, lequel axe de rotation sensiblement horizontal est de préférence perpendiculaire à l'axe longitudinal du navire (1) ;
dégager le support de pylône de l'extrémité inférieure (20) de la section de pylône (8), lever la section de pylône avec la grue d'installation (6) dans une direction ascendante, et utiliser la grue d'installation afin de positionner la section de pylône, tout en étant supportée dans une position verticale, au-dessus du site d'installation ; et
abaisser la section de pylône (8) dans une position installée sur le site d'installation (27) ; et
actionner les unités d'élévation afin d'abaisser la coque flottante (2) du navire (1) dans la mer et de rétracter les jambes autoélévatrices (3) vers le haut.

2. Procédé selon la revendication 1, dans lequel le chariot (11) est prévu avec un berceau pivotant, pour mettre en prise une extrémité inférieure (20) de la section de pylône (8) et pour pivoter avec la section de pylône alors qu'elle est renversée, pour guider et supporter, de manière continue, la section de pylône au niveau de l'extrémité inférieure pendant le processus de renversement.

3. Procédé selon une ou plusieurs des revendications précédentes, le procédé comprenant l'étape consistant à stocker au moins un pieu (9) sur le pont du navire (1), lequel au moins un pieu est stocké dans la position de transport horizontale, dans laquelle il est positionné au-dessus du rail de guidage (5), le pieu ayant une longueur d'au moins 90 mètres, encore de préférence ayant une longueur d'au moins 100 mètres.

4. Procédé selon la revendication 3, dans lequel l'extrémité inférieure du pieu (9), dans la position de transport, est positionnée au niveau de l'extrémité de support du rail de guidage (5) et l'extrémité supérieure du pieu s'étend par-dessus bord au niveau de l'extrémité d'installation du rail de guidage.

5. Navire de type autoélévateur (1) pour installer une section de pylône (8) d'une éolienne sur un site d'installation d'éolienne (27), le navire autoélévateur comprenant :
une coque flottante (2) avec un pont principal (7) pour stocker la section de pylône (8) pendant le transport, la section de pylône ayant un axe longitudinal s'étendant entre une extrémité supérieure de la section de pylône et une extrémité inférieure (20) de la section de pylône ;
au moins trois jambes autoélévatrices (3) ;
une pluralité d'unités d'élévation (4), chacune associée à une jambe autoélévatrice (3) respective, adaptée pour déplacer la jambe autoélévatrice respective verticalement par rapport à la coque (2) et pour amener le navire (1) dans une position opérationnelle dans laquelle les jambes mettent en prise le plancher marin et la coque est au-dessus du niveau de l'eau ;
un rail de guidage de section de pylône (5) et un chariot de rail (11) associé,
dans lequel le rail de guidage (5) est positionné sur ou dans le pont principal (7) et s'étend entre une extrémité de support (13) du rail de guidage et une extrémité d'installation (14) du rail de guidage, et dans lequel le chariot de rail (11) comprend un support de pylône pour mettre en prise l'extrémité inférieure (20) de la section de pylône (8) ; et
une grue d'installation de section de pylône (6, 06'), laquelle grue d'installation est fixée à la coque du navire (1) au niveau de l'extrémité d'installation (14) du rail de guidage (5) pour lever la section de pylône (8), dont une extrémité est au moins partiellement supportée par le chariot de rail (11), la grue d'installation ayant une flèche (24) qui peut pivoter autour d'un axe de pivotement vertical (26) et pivotant vers le haut et vers le bas autour d'un axe de pivot de flèche horizontal (26),
**caractérisé en ce que** le support de pylône est configuré pour guider l'extrémité inférieure (20) de la section de pylône (8) le long du rail de guidage (5), de préférence de l'extrémité de support à l'extrémité d'installation, alors que la section de pylône est renversée d'une position de transport horizontale dans une position d'installation, dans laquelle position d'installation, la section de pylône a une orientation verticale et est au moins partiellement supportée par le support de pylône.

6. Navire selon la revendication 5, dans lequel le support de pylône est configuré pour se déplacer, de préférence pivoter entre :
une première position, pour supporter au moins partiellement la section de pylône (8) au niveau de son extrémité inférieure (20), lorsque la section de pylône est dans la position de transport horizontale, dans laquelle position de transport horizontale, la section de pylône a une orientation essentiellement horizontale et une seconde position, pour supporter au moins partiellement la section de pylône (8) au niveau de son extrémité inférieure (20), lorsque la section de pylône est dans la position d'installation.

7. Navire selon une ou plusieurs des revendications 5 à 6, dans lequel le navire (1) comprend en outre un support d'extrémité supérieure de section de pylône, lequel support d'extrémité supérieure est positionné au niveau de l'extrémité d'installation (14) du rail de guidage (5) pour mettre en prise l'extrémité supérieure (19) de la section de pylône (8) lorsque la section de pylône est dans une position de transport horizontale, dans laquelle position de transport horizontale, l'axe longitudinal (18) de la section de pylône s'étend sensiblement parallèlement au pont principal (7) et au rail de guidage, et de préférence dans lequel le support d'extrémité supérieure de section de pylône est monté, de manière amovible, sur le pont du navire ou sur le rail de guidage.

8. Navire selon une ou plusieurs des revendications 5 à 7, dans lequel le chariot de rail (11) est prévu avec un entraînement de chariot pour le déplacement contrôlé du chariot le long du rail de guidage (5) pendant le processus de renversement, par exemple dans lequel le chariot comprend un entraînement avec un pignon qui coopère avec une crémaillère s'étendant le long du rail de guidage, et
de préférence, le chariot est prévu avec un berceau ou support de pylône monté de manière pivotante pour supporter la section de pieu, et un entraînement de berceau pour faire pivoter le berceau avec le pieu pendant le processus de renversement.

9. Navire selon une ou plusieurs des revendications 5 à 8, dans lequel le navire (1) comprend un emplacement de stockage de section de pylône sur au moins un côté du rail de guidage (5), afin de supporter une section de pylône (8) dans une position de stockage horizontale dans laquelle un axe longitudinal (18) de la section de pylône (8) s'étend parallèlement au rail de guidage et parallèlement à une section de pylône dans la position de transport horizontale sur le rail de transport, et
dans lequel le navire comprend un dispositif de transfert de section de pylône, par exemple une ou plusieurs grues ou un rail de transfert avec un ou plusieurs chariots de rail, pour transférer une section de pylône de la position de stockage horizontale dans la position de transport horizontale.

10. Navire selon la revendication 9, dans lequel le navire (1) compromet en outre au moins un rail de transfert supérieur et un rail de transfert inférieur, le rail de transfert supérieur et le rail de transfert inférieur s'étendant sensiblement perpendiculairement au rail de guidage (5), et le rail de transfert supérieur et le rail de transfert inférieur comprenant au moins un chariot de transfert supérieur et au moins un chariot de transfert inférieur pour supporter une section de pylône (8) au niveau du sommet (19) et du fond (20) respectivement, afin de déplacer la section de pylône dans et hors de la position de transport horizontale sur le rail de guidage.

11. Navire selon une ou plusieurs des revendications 5 à 10, dans lequel le rail de guidage (5) et le chariot de rail (11) sont configurés pour supporter la section de pylône (8) dans la position de transport horizontale de sorte que l'axe longitudinal de la section de pylône (18) s'étend parallèlement à un axe longitudinal du navire (15) et de préférence est positionné au centre du navire.

12. Navire selon une ou plusieurs des revendications 5 à 11, dans lequel le rail de guidage (5) et le chariot de rail (11) sont configurés pour supporter la section de pylône (8), lorsqu'elle est dans la position de transport horizontale, avec l'extrémité supérieure (19) positionnée à proximité de la grue d'installation (6, 6') et un bord d'installation du pont, c'est-à-dire le bord du pont sur lequel la section de pylône sera levée du navire, et l'extrémité inférieure (20) positionnée à l'opposé de la grue d'installation et du bord d'installation du navire.

13. Navire selon une ou plusieurs des revendications 5 à 12, dans lequel l'extrémité d'installation (14) du rail de guidage (5) est positionnée au niveau d'un côté d'installation du pont principal (7) du navire (1), et dans lequel de préférence le rail de guidage s'étend perpendiculairement au côté d'installation du pont principal du navire.

14. Navire selon une ou plusieurs des revendications 5 à 13, dans lequel l'axe de pivotement vertical des grues d'installation (6, 6') respectives définit un plan virtuel, et dans lequel un côté d'installation du pont principal (7) du navire (1) est positionné au niveau d'un côté d'installation du plan virtuel et le pont principal est positionné au niveau d'un côté de pont du plan virtuel.
